## Europäisches Patentamt
## European Patent Office
## Office européen des brevets

(11) Veröffentlichungsnummer: **0 509 288 B1**

(12)
# EUROPÄISCHE PATENTSCHRIFT

(45) Veröffentlichungstag der Patentschrift: **21.06.95**

(51) Int. Cl.6: **G01F 1/72**, G01F 1/64, G01F 1/708, G01F 1/74, A01J 7/00

(21) Anmeldenummer: **92105227.0**

(22) Anmeldetag: **26.03.92**

(54) **Verfahren und Vorrichtung zur Messung eines der Masse eines Milchpfropfens entsprechenden Wertes sowie des entsprechenden Milchflusses.**

(30) Priorität: **27.03.91 DE 4110146**

(43) Veröffentlichungstag der Anmeldung:
**21.10.92 Patentblatt 92/43**

(45) Bekanntmachung des Hinweises auf die Patenterteilung:
**21.06.95 Patentblatt 95/25**

(84) Benannte Vertragsstaaten:
**AT CH DE DK ES FR GB IT LI NL SE**

(56) Entgegenhaltungen:
**EP-A- 0 141 965**
**GB-A- 2 101 739**
**GB-A- 2 124 877**
**US-A- 4 523 545**
**US-A- 4 629 903**

**PATENT ABSTRACTS OF JAPAN vol. 9, no. 281 (P-403)(2004) 8. November 1985 & JP-A-60 123 732**

**R.J.Goldstein (Edt.): "FLUID MECHANICS MEASUREMENTS", Hemisphere Publishing Corporation, New York and Springer-Verlag, Berlin, 1983, pp.479-527**

(73) Patentinhaber: **BIO-MELKTECHNIK HOEFEL-MAYR & Co.**
**Steinwichslenstrasse 20**
**CH-9052 Niederteufen (CH)**

(72) Erfinder: **Hoefelmayr, Tilman, Dr.**
**Steinwichslenstrasse 20**
**Ch-9052 Niederteufen (CH)**
Erfinder: **Maier, Jakob**
**Schelmengriesstrasse 1**
**W-8939 Türkheim (DE)**

(74) Vertreter: **Patentanwälte Grünecker, Kinkel-dey, Stockmair & Partner**
**Maximilianstrasse 58**
**D-80538 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur Messung eines der Masse eines Milchpfropfens entsprechenden Wertes sowie des entsprechenden Milchflusses.

Der Melkvorgang dauert von Kuh zu Kuh, aber auch bei einer einzelnen Kuh unterschiedlich lange. Typische Melkzeiten liegen zwischen 3 bis 10 min.

Ein Blindmelken, d.h. ein Arbeiten der Melkmaschine an einem Euter, aus dem praktisch keine Milch mehr fließt, schädigt das Zitzengewebe und ist für die Eutergesundheit sehr gefährlich. Deshalb muß das Melkzeug möglichst unmittelbar nach dem Versiegen des Milchflusses abgenommen oder abgeschaltet werden.

Bei zunehmender Rationalisierung verwendet man heute bereits vielfach sogenannte Milchfluß-Indikatoren, die das Melkende selbsttätig erfassen und ein entsprechendes, meist elektrisches oder pneumatisches Signal abgeben. Je nach Technisierungsgrad löst das Signal des Milchfluß-Indikators folgende Vorgänge aus:

1. Ein optisches oder akustisches Signal an den Melker,
2. eine automatische Abschaltung der Pulsation oder Herabsetzung der Melkintensität,
3. eine vollautomatische Abnahem des Melkzeugs,
4. eine Nachmelk-Automatik oder
5. eine milchflußabhängige Steuerung der Funktionsparameter der Melkmaschine.

Die wesentlichen Probleme eines sogenannten Milchfluß-Indikators liegen zum einen in einer ausreichenden Schaltgenauigkeit und zum anderen in dem damit meistens verbundenen Vakuumverlusten. Die sogenannte Milchflußkurve (Milchmenge pro Zeiteinheit aufgetragen gegen die Zeitachse) nähert sich bei den meisten Kühen asymptotisch der Null-Fluß-Linie, wobei allerdings der natürliche Verlauf der Milchflußkurve aufgrund der Pulsation und des asynchronen schubweisen Milchtransports durch erhebliche Schwankungen überlagert sein kann.

Als Melkende wird internationl übereinstimmend der Zeitpunkt betrachtet, zu dem die (natürliche) Milchflußkurve den Schwellenwert von 200 g/min unterschreitet. Der Schnitt der Milchlfußkurve mit diesem Schwellenwert ist bei der überwiegenden Mehrzahl der Kühe sehr flach bis schleifend, so daß sich in diesem Kurvenbereich kleine Meßfehler bei der Milchflußkurvenerfassung als beträchtliche Fehler bei der Bestimmung des Zeitpunktes des Melkendes auswirken können.

Diese Gegebenheiten erschweren die zuverlässige Erkennung des wirklichen Melkendes beträchtlich. Wegen dieses Unsicherheitsfaktors wird überlicherweise eine Verzögerungszeit (typisch etwa 30 sec) zwischen dem Eintreten des eigentlichen Indikator-Signals und der wirklichen Auslösung der entsprechenden Funktion, zum Beispiel die automatische Melkzeugabnahme, vorgesehen. Auf diese Weise versucht man sicherzustellen, daß das Euter nach dem Melkvorgang auch wirklich leer ist, was nicht nur für die Wirtschaftlichkeit, d.h. Milchmenge und -fettgehalt, sondern auch für die Eutergesundheit von wesentlicher Bedeutung ist. Andererseits verursacht diese Verzögerungszeit eine Verlängerung des ebenfalls euterschädlichen Blindmelkens und zudem eine Verlängerung der Melkzeit, was seinerseits eine Herabsetzung der Arbeitsproduktivität bedeutet.

Für eine irgendwie verwertbare Aussage über die Größe höherer Milchflüsse (etwa 500 g/min und darüber) sind herkömmliche Milchfluß-Indikatortypen ohnehin ungeeienget, so daß man etwa zu einer effizienten Steuerung der Funktionsparameter der Melkmaschine bisher auf aufwendige Milchmengenmeßsysteme angewiesen ist.

In bezug auf das Problem der Vakuumverluste ist darauf zu verweisen, daß die moderne Standard-Melkmaschine eine Doppelaufgabe hat: Einerseits muß das Vakuum die Milch gegen den Widerstand des Schließmuskels der Zitze aus dem Euter absaugen und andererseits muß das Vakuum die eben ermolkene Milch vom Euter durch den sogenannten langen Milchschlauch bis zu der Milch-Sammelleitung oder dem Meßpokal transportieren, von wo aus die Milch dann frei abfließen kann. Durch diese Art des Transportes zur Sammelleitung mit Hilfe des Melkvakuums entstehen erhebliche hydrodamische Verluste (Strömungsverluste), die mit steigendem Milchfluß proportional zunehmen. Zudem sind viele Melkanlagen sogenannte High-Line-Anlagen, d.h. die Milch-Sammelleitung ist aus bau- und arbeitstechnischen Gründen über Kopfhöhe verlegt, so daß die ermolkene Milch beim Transport hochgefördert werden muß. Diese Höhe liegt in Melkständen bei etwa 1,2 m und in Anbindeställen bei bis zu 2 m. Die sich hier zusätzlich ergebenden hydrostatischen Verluste (Druckverluste) steigen ebenfalls proportional mit dem Milchfluß.

Trotz langjähriger weltweiter wissenschaftlicher Optimierungsarbeiten an den Funktionsparametern der Melkmaschine sind die sich addierenden Strömungs- und Druckverluste nach wie vor ein gravierendes Problem. Melktechnisch bedeuten diese Verluste nämlich, daß selbst bei vollkommen stabilisiertem Betriebsvakuum in der Milchsammelleitung (große Leistungsquerschnitte, starke Vakuumpumpe, exakt arbeitendes Vakuumregelventil usw.) die Höhe des am Euter tatsächlich wirksam werden Melkvakuums mit zunehmenden Milchfluß immer stärker zusammenbricht, also genau dann, wenn es für einen effizienten Milchentzug am dringstens benötigt wurde. Um überhaupt höhere Milchflüsse moderner Kühe bewältigen zu können, ist man daher gezwungen, das Betriebsvakuum in konventionellen Melkanlagen erheblich über dem Vakuum einzustellen, das biologisch für den Entzug erforderlich ist. Mit dieser Maßnahme wird aber während des Melkvorgangs bei abnehmendem Milchfluß, d.h. bei abnehmenden Vakuumverlusten, und insbesondere beim Blindmelken das Zitzengewebe dem ungedämpften, vollen unphysiologisch hohen Betriebsvakuum ausgesetzt, was zu entsprechenden Gewebeschäden und lähgerfristig (aufgrund von Zitzenverhärtungen als biologische Abwehrreaktion des Organismus) zu einem insgesamt immer langsameren Melken fuhren muß.

Da ein Milchfluß-Indikator zur Erfüllung seiner Aufgabe irgendwo nach dem Euter und vor der Milchsammelleitung - meist am Ende des langen Milchschlauchs - angeordnet sein muß, wird aus dem Gesagten klar, daß jeder Vakuumverlust, den ein Indikator zusätzlich erzeugt, einen direkten, nicht kompensierbaren, negativen Effekt auf die Qualität des Melkvorgangs mit den entsprechenden Folgen für Eutergesundheit und Wirtschaftlichkeit ausüben muß.

Es sind bereits die vielfältigsten Milchfluß-Indikatoren bekannt geworden.

Bei den sogenannten Kammer-Indikatoren handelt es sich um ein geschlossenes Staugefäß, das oben befüllt wird. Im Inneren ist ein oben offenes Standrohr angebracht, das mit der unteren Abflußleitung in Verbindung steht und auf Bodenniveau eine kleine kalibrierte Abflußöffnung aufweist, durch die während des Melkvorgangs laufend 200 g/min in die Abflußleitung abfließt. Im Staugefäß befindet sich ein Schwimmer oder auch ein Elektrodenpaar zur konduktiven oder kapazitiven Messung oder es kann auch eine Lichtschranke vorgesehen sein, die ein Signal abgibt, sobald das Flüssigkeitsniveau im Staugefäß unter ein gewisses Maß abgesunken ist, siehe etwa DE-OS 21 34 976 oder US-PS 4,714, 048.

Bei den Staukammern wird über die integrierende Wirkung des Staukammervolumens grundsätzlich eine vorteilhafte Glättung des meist unruhigen Milchflußsignals erreicht. Gleichzeitig ergibt sich aber durch das Kammervolumen auch eine automatische Verzögerungszeit, die sich als besonders nachteilig erweisen kann, da die Verzögerungszeit nicht nur durch das Staukammervolumen sondern auch durch die Differenz zwischen Zulauf und Ablauf zum Staugefäß bestimmt wird, was in der Praxis bei langsam versiegenden Milchflüssen die Gefahr extrem verlängerter Verzögerungszeiten, die den an sich vorgesehen Wert sogar um ein Vielfaches übersteigen können, in sich birgt.

Bei den Indikatoren mit Umlenkkammer, etwa entsprechend der DE-OS 22 00 141 wird die Milch von unten, meist über ein teilweise in die Kammer vorstehendes Leitrohr, in die Kammer eingeleitet und dort aufgespalten. Die Abführung erfolgt durch eine Öffnung im Boden oder eine Seitenöffnung in Bodenhöhe. Meist nahe dem Boden ist ein Elektrodenpaar angeordnet. Bei normale Melken werden die Elektroden durch die Milch intensiv überspült, so daß der elektrische Kontakt zwischen den Elektroden geschlossen ist. Sinkt der Milchfluß allmählich so werden die Elektroden immer seltener überspült, wodurch der Widerstand zunimmt, bis schließlich keine Benetzung mehr stattfindet und der Kontakt damit vollständig unterbrochen wird. Ein solcher Indikator gibt ein sehr unsicheres Grundsignal, das ganz erheblich streut. Außerdem sind Indikatoren dieser Art sehr lageempfindlich und sie haben weiter den großen Nachteil erheblicher Vakummverluste wie alle Kammersysteme.

Die sogenannten Rohrindikatoren bestehen zumeist aus einem kurzen Rohrstück, das normalerweise von der Milch von oben nach unten durchflossen wird. Da solche Indikatoren zumeist auch keine strömungsmechanisch störenden Einbauten aufweisen, ergeben sich verhältnismäßig niedrige Strömungsund insbesondere Vakuumverluste. Aus der GB-65 0 199 sowie der US-PS 3,115,116 sind Ringelektrodenindikatoren bekannt, bei denen entlang der Flußrichtung der Milch zwei elektrisch leitende Rohrstücke durch ein Isolatorstück im Abstand voneinander gehalten werden. Zwischen den Elektroden wird der elektrische Widerstand gemessen, der sich in Abhängigkeit von der Größe des Milchflusses ändert. Die Genauigkeit dieses Meßsystems wird äußerst stark beeinflußt durch die sich von Kuh zu Kuh ändernde elektrische Leitfähigkeit der Milch, durch die sehr stark schwankenden Widerstandswerte bei anbehmendem Milchfluß gegen Ende des Melkvorganges sowie auch durch vorhergehende Reinigungsprozesse, die den Übergangswiderstand und die Benetzungeigenschaft der Wände verändern.

Aus der US-Patentschrift 4,010,715 ist auch bereits ein Ringelektrodenindikator bekannt, bei dem auf einander gegenüberliegenden Seiten einer von der zu messenden Flüssigkeit durchflossenen Leitung Elektroden angeordnet sind. Mit Hilfe einer an diese Elektroden angelegten hochfrequenten Wechselspannung wird in der Flüssigkeit ein elektrischer Leitungsstrom erzeugt, der sich mit der ionischen Leitfähigkeit der zu messenden Flüssigkeit ändert. Ein solches Meßgerät ist für die Messung von Milchflüssen ungeeignet, da sich die Leitfähigkeit der Milch in Abhängigkeit von den einzelnen Kühen wie auch von den Fütterungsbedingungen ändert.

Auch bei dem aus der US-Patentschrift 4,348,984 bekannten Milchfuß-Indikator hängt das Meßsignal von der elektrischen Leitfähigkeit der zu messenden Milch ab. Die Messung des Milchflusses erfolgt derart, daß die Milch durch eine über einen Hochfrequenzoszillator gespeiste Spule geleitet wird und hierbei in der Spule ein Induktionssignal erzeugt.

Auch bei dem aus der US-PS 4,523,545 bekannt gewordenen Milchflußindikator hängt die Messung von dem gemessenen elektrischen Widerstandswert ab, der zwischen zwei Metallrohren im Inneren des Steigleitungsabschnittes während des Durchlaufs eines Milchpfropfens gemessen wird. Der Schwellwert für eine Abschaltung des Melkvorganges und Abnahme des Melkzeuges wird schließlich aus diesem gemessenen elektrischen Widerstandswert in Verbindung mit der Zeit bestimmt, die ein Milchpfropfen benötigt für den Durchlauf durch eine Meßstrecke.

Bei den photoelektrischen Rohrindikatoren, wie sie etwa aus der EP 0 221 733 bekannt sind, besteht das Meßsystem zumeist aus einem glatten, kurzen durchsichtigen Rohr, das meist senkrecht steht und so in den langen Milchschlauch eingefügt ist, daß der Milchstrom das Rohr von oben nach unten durchströmt. Auf einander gegenüberliegenden Seiten des Rohres ist eine Lichtquelle mit konstanter Lichstärke, sowie ein Photosensor angeordnet. Für die Messung des Milchflusses benutzt man die Abnahme der Streuung des Lichtes bei abnehmender Milchfilmstärke im durchflossenen Rohr. Den offensichtlichen Vorteilen dieses Systems (keine Vakuumverluste, Unabhägigkeit von Leitfähigkeitsänderungen der Milch) stehen beträchtliche Nachteile gegenüber. Die Schaltgenauigkeit ist unbefriedigend, weil die Schichtdicke des Milchfilms als quantitatives Merkmal mit Hilfe der Lichtstreuung nur unzulänglich erkannt werden kann. Auch der dünnste, nicht mehr fließende Film ergibt noch eine erhebliche Lichtabsorption, die sich signalmäßig kaum differenzierbar von einem fließend und wesentlich dickeren Wandstrom unterscheidet. Dieser wesentliche Nachteil kommt deshalb noch verstärkt zum Tragen, weil der Meßwert aus einem diskontinuierlich fließenden Milch-Luftgemisch abgegriffen werden muß.

Die GB-A-1,130,691 offenbart ebenfalls ein photoelektrisches Verfahren und ein Gerät zum Bestimmen des Milchdurchflusses in einer transparenten Falleitung, an der eine Lichtschranke angebracht ist, die ein Ja/Nein-Signal erzeugt in Abhängigkeit davon, ob die Milch die Rohrleitung vollständig ausfüllt oder nicht. Dieses Signal wird von einer Zeitmesseinrichtung integriert, die jeweils nach Erreichen eines vorgegebenen Betrags ihrerseits einen Puls erzeugt. Diese Dokument weist auch darauf hin, daß die Funktion der Lichtschranke auch von einer aus zwei Elektroden, zwischen denen die Milch hindurchfließt, gebildeten Widerstandsmeßstrecke übernommen werden kann.

Den Schwierigkeiten, die gerade durch die sich ändernden Bedingungen des Milchschaumes oder des Milchfettgehaltes ergeben, versuchten Trebus, Wehowsky, Schulze in Agrartechnik 20/2, Februar 1980 dadurch zu vermeiden, daß sie das Vorbeiströmen von Milchschaum und eines Milchfilms mit hohem Fettgehalt gegen Melkende entlang der Meßrohrwand des Milchstromindikators dadurch zu verhindern suchten, daß in den Rohrwandungen oberhalb des das Rohr durchsetzenden Meßstrahls Sicken oder Einbuchtungen gegen das Innere des Rohres hin ausgebildet sind die für den entlang der Innenwand strömenden Milchfilm sozusagen als Abweiser dienen, um die von dem Meßlichtstrahl durchsetzten Rohrwand von einem solchen Film möglichst frei zu halten. Wie wenig genau jedoch derartige photoelektrisch arbeitende Milchflußindikatoren arbeiten, zeigt eine Untersuchung in Tierzucht 42 (1988, Seite 5 11) wonach sich für die mittlere Gesamtmelkzeit pro Kuh eine Verlängerung von 2,53 min d.h. eine Verlängerung von etwa 50% bei der Verwendung derartiger Milchflußindikatoren verglichen mit der präzisen Schwellenwerterfassung mit Hilfe eines Milchmengenmessers ergibt.

Der vorliegenden Erfindung liegt deshalb die Aufgabe zugrunde, ein Verfahren sowie eine Vorrichtung der eingangs erwähnten Art anzugeben, mit denen eine genauere Messung der Milchpfropfenmasse und daraus des Milchflusses und gegebenenfalls eines Milchflußschwellwertes auch in dem niedrigen Milchflußbereich erreicht werden kann.

Diese Aufgabe wird erfindungsgemäß durch ein Verfahren nach Anspruch 1 gelöst. Wie weiter unten noch ausgeführt wird, wurde überraschend herausgefunden, daß sich die Form des transportierten Milchpfropfens insbesondere bei geringen Milchflüssen stark verändert. Es bedarf deshalb einer geeigneten Messung des Milchpfropfens um überhaupt eine annehmbare Aussage über die in einem Milchpfropfen enthaltene Masse und daraus wiederum eine Aussage über den Milchfluß d.h. über den Transport von Milch pro Zeit erhalten zu können. Wie sich ebenfalls herausgestellt hat, sind für ein vorgegebenes Melkzeug die Geschwindigkeiten der einzelnen Milchpfropfen bei niedrigen Milchflüssen in etwa konstant, so daß nach gegebenenfalls entsprechender Eichung von einer vorbestimmten Pfropfengeschwindigkeit ausgegangen werden kann. Dies erlaubt eine einfache Messung des Milchflußwertes bei niedrigen Milchflüssen.

Soll lediglich ein Steuersignal bei Unter- oder Überschreiten eines vorbestimmten Milchflusses insbesondere im niedrigen Milchflußbereich, erzeugt werden, so wird gemäß einer weiteren Ausführungform der gemessene Milchflußwert jeweils mit einem, einen Schwellwert bildenden, voreingestellten zweiten Milchflußwert verglichen und bei Unter- oder Überschreiten dieses voreingestellten Milchflußwertes ein Steuersignal erzeugt. Hierdurch wird auf äußerst einfache Weise mit verhältnismäßig großer Genauigkeit etwa der Milchfluß erfaßt, bei dem der Melkvorgang beendet werden sollte, und es wird ein entsprechendes Steuersignal erzeugt.

Bei der zeitlichen Mittelung über aufeinanderfolgende Milchpfropfen kann so vorgegangen werden, daß jeweils die Zeit des Vorbeilaufs jedes Milchpfropfens in Beziehung gesetzt wird zu dem zeitlichen Abstand dieses Pfropfens von dem nächstfolgenden Pfropfen, oder daß die der Länge der jeweiligen Pfropfen entsprechenden Meßwerte über einen vorbestimmten Zeitraum aufsummiert und durch die Anzahl des Auftretens der Pfropfen während dieses Zeitraums sowie die Zeit des Zeitraums dividiert werden, oder daß jeweils über mehrere Pfropfen ein sogenannter gleitender Durchschnittswert gebildet wird.

Die Genauigkeit der Messung des Milchflusses gerade bei niedrigen Milchflüssen aber auch der Messung des Milchflusses in einem großen Milchflußbereich kann dadurch erheblich gesteigert werden, daß gemäß Anspruch 3 die Transportgeschwindigkeit der Milchpfropfen gemessen wird. Ein derartiges Verfahren eignet sich nicht nur zur Bestimmung des Milchflußschwellwertes am Ende des Melkzyklus sondern auch zu einer relativ genauen Milchflußmessung über den gesamten Melkbereich. Die zeitliche Mittelung erfolgt in diesem Fall so, daß über die Zeit mehrere aufeinanderfolgende Milchpropfen gemittelt und aus dieser gemittelten Zeit unter Berücksichtigung der gegebenenfalls gleichfalls gemittelten Transportgeschwindigkeit die Größe des Milchflusses bestimmt wird.

Natürlich ist es nicht notwendig, daß die Transportgeschwindigkeit eines Milchpfropfens jeweils explizit gemessen wird. Eine annähernd gleichwertige Messung des Milchflusses wird dadurch erreicht, daß die Zeit für den Durchlauf jedes Milchpfropfens durch eine vorbestimmte Strecke gemessen wird und daß mit Hilfe dieses Zeitwertes die Masse eines Milchpropfens unter der Annahme einer vorbestimmten Pfropfengeschwindigkeit ermittelt und der mittlere Michflußwert bestimmt wird.

Wird der Milchflußmesser lediglich als Milchflußindikator eingesetzt, so wird zweckmäßigerweise das Verfahren derart durchgeführt, daß bei Unterschreiten eines bestimmten Milchflusses ein Steuersignal erzeugt wird.

Gemäß der Erfindung werden auch Vorrichtungen nach Ansprüchen 5, 10 und 11 angegeben.

Die vorzugsweise Ausgestaltung und Anordnung der Meßstellen bzw. Elektroden gehen aus den Unteransprüche hervor.

Ein besonderer Vorteil der erfindungsgemäßen Vorrichtung besteht darin, daß eine äußerst einfach aufgebaute und arbeitende Meßvorrichtung erhalten wird, die einerseits eine verhältnismäßig genaue Bestimmung eines Milchflußschwellwertes oder sogar die Messung des absoluten Milchflusses gestattet aber andererseits praktisch vernachlässigbare Vakuumverluste mit sich bringt.

Vorzugsweise wird der Milchflußwert auf einen Schwellwertindikator gegeben, der bei Unterschreiten eines voreingestellten Schwellwertes ein entsprechendes Steuersignal erzeugt.

Eine vereinfachte Vorrichtung kann darin bestehen, daß lediglich eine über die gemessenen Zeitwerte aufeinanderfolgender Milchpfropfen zeitlich mittelnde Einrichtung vorgesehen wird, und daß ein Schwellwertkomparator zum Vergleich des von dieser Einrichtung erhaltenen Ausgangssignals mit einem durch Kalibrieren erhaltenen, einen Schwellwert bildenden, voreingestellten zweiten Signalwert vorgesehen wird.

Zur genaueren Bestimmung des Milchflußwertes und zur Messung des Milchflusses während des gesamten Melkvorgangs wird vorzugsweise in dem Steigleitungsabschnitt im Inneren des Steigleitungsrohrs eine quer zur Transportrichtung der Milchpfropfen verlaufende erste Meßstrecke und in Längsrichtung des Steigleitungsrohrs im Abstand von der ersten Meßstrecke angeordnete zweite Meßstrecke vorgesehen und es wird zur Ermittlung der Geschwindigkeit jedes Milchpfropfens eine Einrichtung zur Messung der Zeitdifferenz jedes die erste und zweite Meßsrecke durchlaufenden Milchpfropfens vorgesehen.

Die zweite Meßstrecke kann einen im Zusammenhang mit der Beschreibung der ersten Meßstrecke beschriebenen Aufbau oder den gleichen Aufbau wie die erste Meßstrecke haben.

Gemäß einer vorzugsweisen Ausgestaltung wird in Transportrichtung der Pfropfen unmittelbar hinter der Meßvorrichtung eine Milchrücklaufsperre vorgesehen. Diese kann etwa in Form eines Rückschlagventils oder auch in Form eines in das Milchschloß mündenden Krümmerteils ausgestaltet sein. Die erfindungsgemäße Vorrichtung ermöglicht insgesamt auch die getrennte Messung der von den einzelnen Zitzen herkommenden Milchflüsse, wenn etwa ein sogenannter Viergemelksschlauch mit vier getrennten Abführleitungen verwandt wird, in denen jeweils eine erfindungsgemäße Meßvorrichtung angeordnet sein kann.

Im folgenden soll die Erfindung näher anhand von in der Zeichnung dargestellten vorzugsweisen Ausführungsbeispielen erläutert werden. In der Zeichnung zeigen:

Fig.1

eine schematische Darstellung eines mittels der elektrischen Leitfähigkeit messenden erfindungsgemäßen Milchfluß-Indikators,

Fig.2
eine schematische Darstellung des Aufbau eines optisch messenden erfindungsgemäßen Milchfluß-Indikators,

Fig.3
eine schematische Darstellung eines kapazitiv messenden erfindungsgemäßen Milchfluß-Indikators, mit gleichzeitiger Messung der Milchpfropfengeschwindigkeit,

Fig.4
eine schematische Darstellung einer weiteren Ausführungsform eines erfindungsgemäßen Milchflußmessers,

Fig.5
eine graphische Darstellung des gemessenen Milchflusses in kg/min aufgetragen über der Zeit,

Fig.6
eine weitere Darstellung einer gemessenen Kurve, in der der gemessene Milchfluß in kg/min über der Zeit in Minuten aufgetragen ist,

Fig.7 bis Fig.9
Darstellungen verschiedener Milchpfropfenformen im Längsschnitt,

Fig.10
einen Längsschnitt durch den in die Milchleitung mündenden Steigleitungsabschnitt des langen Milchschlauches in der Nähe des Milchschlosses,

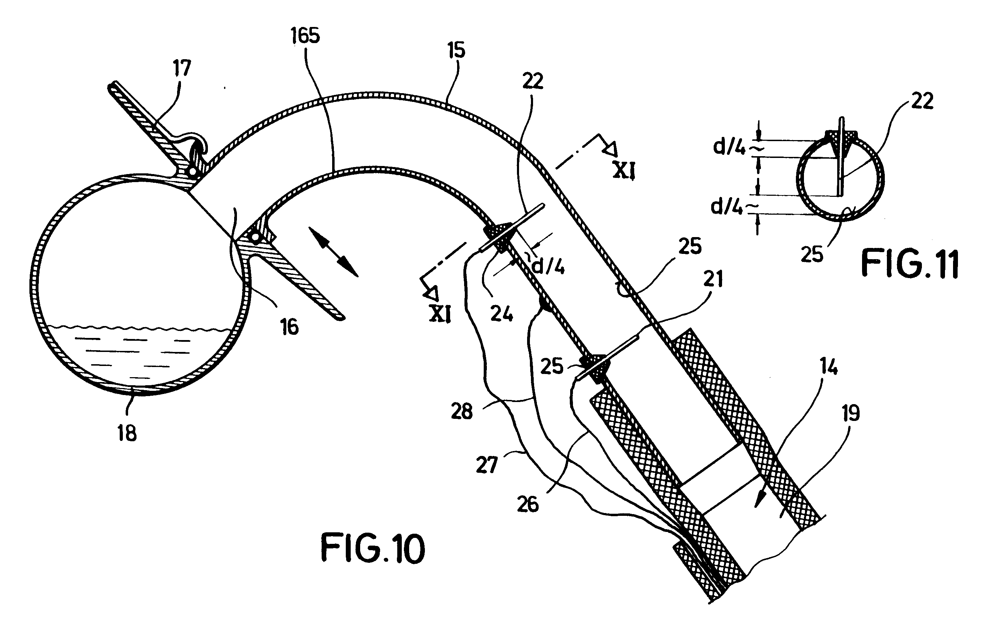

Fig.11
einen Schnitt entlang der Linie XI-XI in Fig. 10,

Fig.12
einen schematisch dargestellten Querschnitt durch eine Ausgestaltung einer Meßstrecke,

Fig.13
gelöscht,

Fig.14
einen schematischen Querschnitt durch eine weitere Ausgestaltung einer Meßstrecke,

Fig.15
eine schematische Darstellung im Querschnitt einer weiteren Ausgestaltung einer Meßstrecke für eine optische Messung,

Fig.16
eine weitere schematische Darstellung im Längsschnitt durch einen Steigleitungsabschnitt mit einer Meßstrecke, und

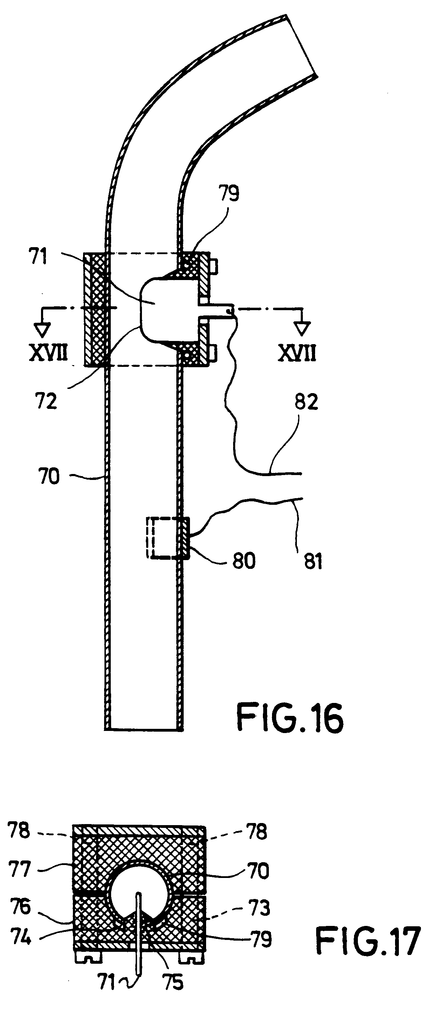

Fig.17
einen Schnitt entlang der Linie XVII-XVII in Fig. 16.

Fig.18
einen Schnitt durch einen Steigleitungsabschnitt, in dem über zwei Meßstrecken ein Rückschlagventil vorgesehen ist,

Fig.19
einen Schnitt durch eine Steigleitung, in der eine Meßstrecke vorgesehen ist und an deren oberen Ende ein Absperrventil vorgesehen ist, und

Fig.20
eine schematische Darstellung einer Melkanalage mit einer über Kopf verlegten Milchabführleitung, zu der von dem Melkzeug eine Steigleitung hochführt.

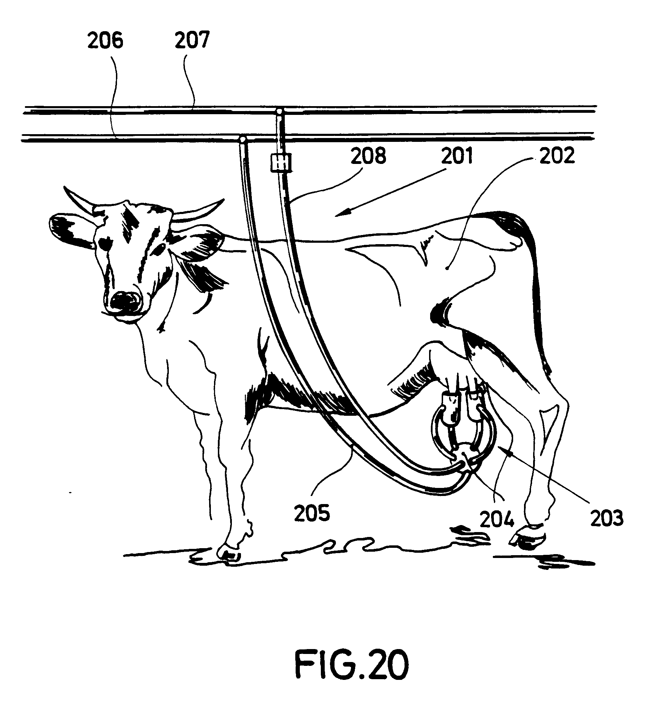

In Fig. 20 ist eine allgemein mit 201 bezeichnete Melkanlage dargestellt, die an dem Standplatz einer Kuh 202 montiert ist. Die mit Hilfe eines an die Zitzen der Kuh angesetzten Melkzeuges 203 abgemolkene Milch wird in einem Sammelstück 204 gesammelt und über eine gemeinsame Steigleitung 205 in eine über Kopf angeordnete Milchabaführleitung, die sogenannte Melkleitung, mit Hilfe von Unterdruck abtransportiert. Parallel zu der Milchabführleitung 206 ist eine weitere Leitung 207 vorgesehen. An diese ist ein Pulsator angeschlossen, der über eine weitere Leitung 208 dem Melkzeug 203 abwechselnd Vakuum und Atmosphärendruck zuführt. Die Steigleitung 205 ist normalerweise in Form einer biegsamen Rohrleitung, etwa in Form eines Schlauches, ausgeführt, der normalerweise in einer etwa durchhängenden Kettenlinie verläuft.

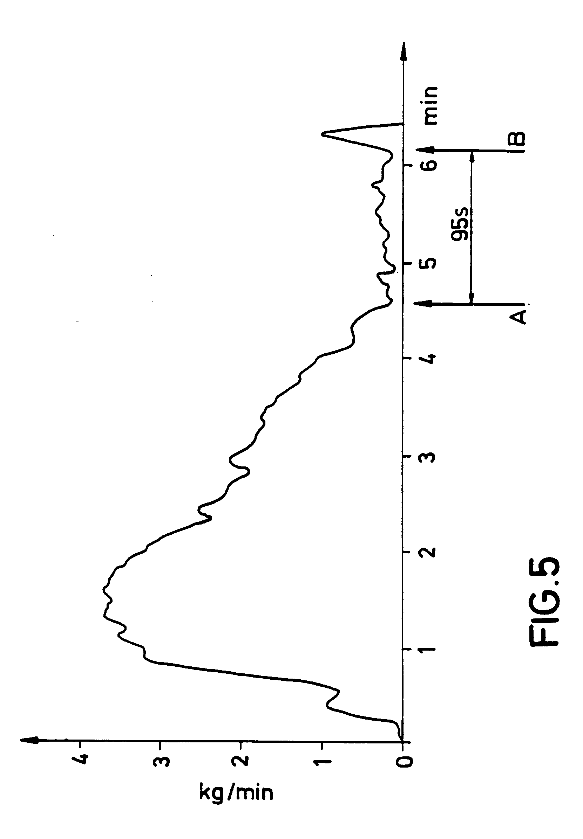

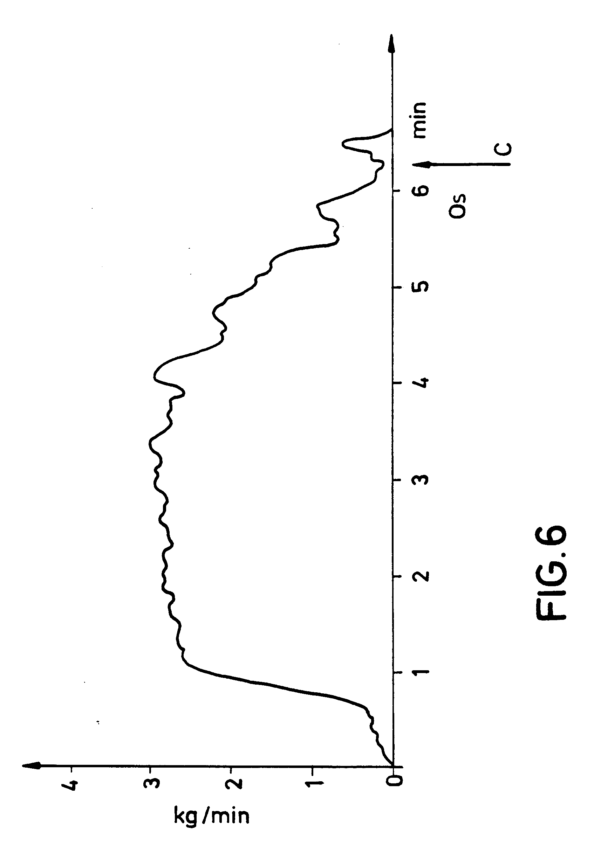

In den Fig. 5 und 6 sind typische Milchflußkurven aufgezeichnet, wie sie beim Melken auftreten können. Auf den Ordinaten ist jeweils der Milchfluß in kg/min aufgetragen, während auf der Abzisse die Zeit in Minuten aufgetragen ist. In Fig. 5 steigt der Milchfluß zunächst an, bis er nach etwa 1,6 min sein Maximum erreicht und sodann wieder langsam abnimmt, bis er bei etwa 4 1/2 min zum ersten Mal die untere übliche Schwellwertgrenze von 0,2 kg/min unterschreitet. Von diesem mit A bezeichneten Zeitpunkt bis zu dem mit B bezeichneten Zeitpunkt, also während einer Zeit von 95 Sekunden, schwankt zumindest der gemessene Milchfluß um den Schwellwert von 0,2 kg/min. Erst nach dem Zeitpunkt B tritt nochmals eine leichte Spitze in der Milchflußkurve auf. Die Spitze bezeichnet man als das sogenannte Nachgemelk, das durch manuellen oder automatischen Eingriff am Melkende gewonnen wird. Bei dieser gemessenen Milchflußkurve trat mithin, da im Punkte A nicht bereits das Melkvakuum abgeschaltet wurde, während einer Zeit von 95 Sekunden ein sogenanntes Blindmelken auf.

Bei der in Fig. 6 gezeigten Milchflußkurve wird der Schwellwert von 0,2 kg/min zum ersten Mal zum Zeitpunkt C d.h. nach etwa 6,2 min erreicht. Da sich anschließend an diesen Zeitpunkt unmittelbar das Nachgemelk anschließt, ist somit bei diesem Melkvorgang die Blindmelkzeit praktisch gleich Null Sekunden gewesen. Die unterschiedlichen Kurven sollen verdeutlichen, daß der zeitliche Verlauf des Milchflusses äußerst unterschiedlich ist, so daß die Erfassung des wahren Melkendes unterschiedlich schwierig ist. Bei Fig. 6 wurde die Erkennung durch einen äußerst aufmerksamen und erfahrenen Melker ohne spezielle Hilfsmittel erreicht, während das Ende in Fig. 5 durch einen praxisüblichen Indikator signalisiert wurde. Zum besseren Verständnis der Schwierigkeiten der Messung des Milchflusses bei niedrigen Milchflüssen und zum besseren Verständnis des der Erfindung zugrundeliegenden Prinzips der besonderen Messung der einzelnen Milchpfropfen sei zunächst noch einmal näher auf den eigentlichen Milchtransport eingegangen.

Zur Reduzierung extrem hoher zyklischer Vakuumschwankungen und hydrostatischer Vakuumverluste wird bei einer modernen Standard-Melkmaschine in das Milchsammelstück oder in die Melkbecher (kontinuierlich oder periodisch) sogenannte Transportluft eingespeist. Die Menge beträgt etwa 8 l/min atmosphärische Luft, was ca. 16 l/min expandierte Luft entspricht. Diese Luftmenge ist auf den optimalen Abtransport des maximal zu erwartenden Milchflusses (typisch etwa 6 l/min) abgestimmt.

Der Milchstrom und der Luftstrom werden bei modernen Maschinen nicht mehr - etwa durch feines Einblasen der Luft direkt in den Milchstrom - innig zu einem kontinuierlich fließenden homogenen Schaumstrom vermischt, weil bei dieser veralteten Technik die Gefahr einer Milchstrukturschädigung stark zunimmt und außerdem erhöhte Vakuumverluste entstehen. Der Milchtransport durch den langen Milchschlauch erfolgt bei heutigen Standard-Maschinen vielmehr in Form von Milchpfropfen oder -kolben, die durch "Luftpfropfen" voneinander getrennt werden (sequentielle Milch-Luft-Trennung). Die Entstehung dieses Pfropfenstromes ist aber nicht primär der durch die Melkpulsation bewirkten, intermitierenden Milchabgabe aus den Zitzen zuzuschreiben. Die strömungsmechanischen Zusammenhänge stellen sich vielmehr wie folgt dar:

Der Leitungstrakt zwischen Euter und Milchsammelleitung bildet bei jeder Melkmaschinenanordnung eine am tiefsten liegende Stelle. Vorrangig interessiert hier das erste Minimum; dieses befindet sich in der Regel beim Sammelstückauslauf oder auch in dem Abschnitt des langen Milchschlauches, der unmittelbar an das Sammelstück anschließt.

Die Querschnitte im Melkzeug sind aus vakuumtechnischen Gründen normalerweise so dimensioniert, daß sie durch die ermolkene Milch nicht voll ausgefüllt werden. Das bedeutet, daß die Milch vom Euter bis zu diesem tiefsten Punkt aufgrund der Schwerkraft abfließen kann, während die in das Melkzeug eingespeiste Transportluft ungehindert über die Milch hinwegstreichen kann. Milch und Luft strömen in diesem fallenden Leitungsast also unabhängig voneinander nach ihren eigenen physikalischen Gesetzen (schichtweise Strömung). Am tiefsten Punkt sammelt sich die zugelaufene Milch wie in einem Siphon. Solange die Transportluft frei über diese Milch hinwegstreichen kann, verbleibt die Milch in dem Siphon. Erst wenn durch zufließende Milch der Siphon für die Transportluft blockiert wird, kann die weiterhin das Melkzeug einströmende Luft nicht mehr durch das Betriebsvakuum abgesaugt werden, mit der Folge, daß es hinter der Blockade also im Melkzeug, zu einer Druckerhöhung, d.h. zu einem Vakuumabfall, kommt. Damit bildet sich eine entsprechende Druckdifferenz vor und hinter der Blockade aus.

Durch diese ansteigende Druckdifferenz wird die im Siphon lagernde und dort gegen die Wände abdichtende Milch zunehmend in den ansteigenden Ast des Siphons geschoben, wodurch sich ein entsprechender hydrostatischer Gegendruck dieses Pfropfens ausbildet. Sobald die an dem Pfropfen aggreifende Druckdifferenz den sich aufbauenden hydrostatischen Druck einschließlich der Wandreibung übersteigt, setzt sich der Pfropfen in Bewegung und wird gegen das Ende des langen Milchschlauchs beschleunigt. Dieser portionsweise diskontinuierliche Abtransport aus dem Siphon wiederholt sich nach jeder neuerlichen Blockade durch wieder neu zulaufende Milch.

Wäre der sich in dem Siphon ausbildende Milchpfropfen zu jeder Zeit gleich groß, so könnte man ohne weiteres aus der Größe des Pfropfens und der zeitlichen Folge dieser Pfropfen auf eine entsprechende Größe des Milchflusses schließen. Aus den verschiedensten Gründen sind diese Voraussetzungen jedoch nicht gegeben. Insbesondere hat sich herausgestellt, daß die primär gebildeten Pfropfen dazu neigen, während des Transports im Milchschlauch zum Teil wieder zu zerfließen. Dies beruht wohl darauf, daß die vom Melkzeug her auf den Milchpfropfen nachdrückende Transportluft auf dem Weg durch den langen Milchschlauch und insbesondere in dessen steigenden Ast versucht, den von ihr vorwärtsgetriebenen Milchpfropfen zunehmend zu durchdringen.

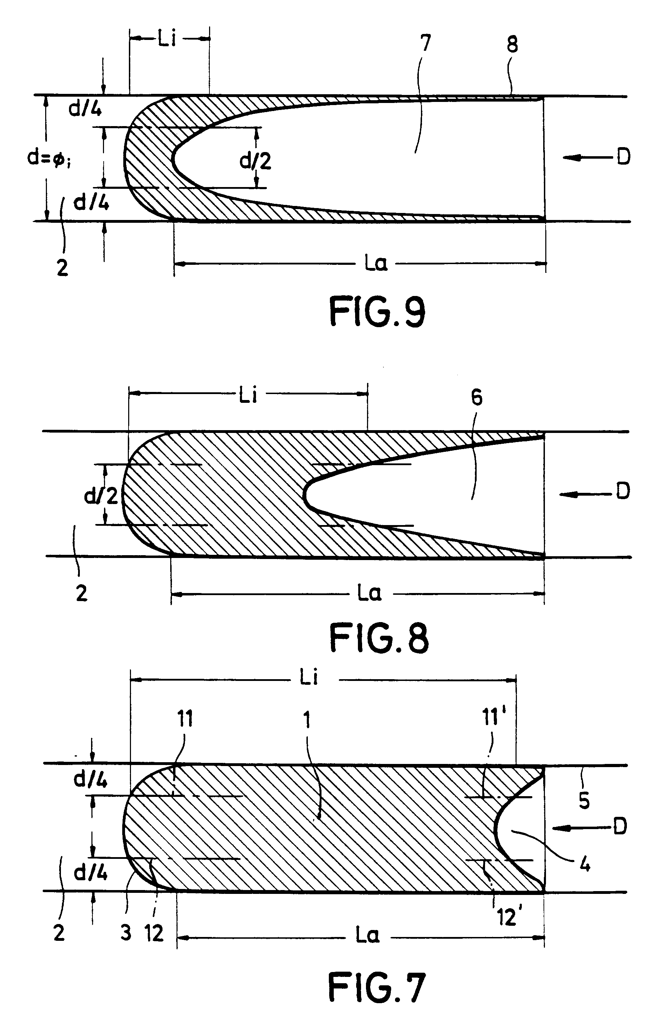

Eine solche erste Veformung eines Pfropfens 1 in dem langen Milchschlauch 2 ist aus der Fig. 7 zu ersehen, wo der Milchpfropfen 1 in der Transportrichtung D vorangetrieben wird. Während das vordere Ende 3 des Pfropfens eine leichte Abrundung zeigt, beginnt sich an seinem hinteren Ende die Mitte 4 des Pfropfens auszuhöhlen. Dies geschieht in der Weise, daß die den Pfropfen ausmachende Flüssigkeit von hinten her langsam aus dem Querschnittszentrum gegen die Leitungswand 5 hin verdrängt wird. Diese Aushöhlung wird im Verlaufe des Transports immer stärker und hat in Fig. 8 beispielsweise bereits die mit 6 bezeichnete Form angenommen, während der in Fig. 9 gezeigte Pfropfen zu einem späteren Zeitpunkt bereits die mit 7 bezeichnete Aushöhlung im Querschnittszentrum aufweist. D.h. die auf der Mittellängsachse des langen Milchschlauches gemessene Dicke des Pfropfens nimmt in den Fig. 7 bis 9 zunehmend ab, während der hintere Bereich des Pfropfens lediglich nur noch aus einer gegen das Ende des Pfropfens hin immer dünner werdenden, an der Innenwand des langen Milchschlauches 2 anliegenden Schicht besteht. Der zunächst einem Vollzylinder gleichende Pfropfen wird also im Lauf des Transport immer mehr zu einer nur noch an ihrem Kopfteil massiven und geschlossenen Hülse verformt, deren Außenwände gegen das Fußende hin progressiv dünner werden. Damit wird der Pfropfen trotz unveränderter Masse zunehmend länger. Das bedeutet umgekehrt, daß Pfropfen gleicher Länge aufgrund eines verschiedenen "Aushöhlungsgrades" völlig verschiedene Massen haben können. In den Fig. 7, 8 und 9 sind aus darstellungstechnischen Gründen nicht Pfropfen mit ursprünglich gleicher Masse dargestellt, da die unterschiedlichen Längen der Pfropfen schwierig darzustellen wären. Durch Fig. 7 bis 9 soll lediglich dargestellt werden, daß Pfropfen mit einer außerhalb des Pfropfens gemessenen gleichen Gesamtlänge von La äußerst verschiedene Massen aufweisen können.

Bei den derzeit üblichen Melkmaschinen werden üblicherweise lange Melkschläuche mit einem inneren Durchmesser $\varnothing_i = d$ zwischen 13 und 18 mm verwandt. Unter Berücksichtigung dieser Druchmesser wurde gefunden, daß angenähert trotz der verschiedensten Kolbenformen eine gute Annäherung zur Bestimmung der Gesamtmasse eines Kolbens dadurch erhalten werden kann, wenn die Dicke des Kolbens in Transportrichtung im wesentlichen im Abstand d/4 von der Innenwand des langen Milchschlauches gemessen wird.

Zur Verdeutlichung sind in Fig. 7 eine erste unterbrochene Linie 11, 11' in einem Abstand d/4 von der Innenwand des langen Milchschlauchs 5 eingezeichnet und in der Querschnittszeichnung der Fig. 7 eine zweite unterbrochene Linie 12, 12' ebenfalls parallel zur Innenwand des langen Milchschlauches 5 im Abstand von d/4 eingezeichnet. Betrachtet man die Schnittpunkte der Linien 11, 11' mit dem in Fig. 7 eingezeichneten Pfropfen, so haben diese Schnittpunkte ebenso wie die Schnittpunkte der Linien 12, 12' mit dem vorderen bzw. hinteren Ende des Pfropfens den gegenseitigen Abstand Li voneinander. Mißt man also die Länge des Pfropfens entlang den angegebenen Linien 11, 11' bzw. 12, 12' so hat der Pfropfen insgesamt die Länge Li. Multipliziert man diese Länge mit dem Querschnitt des langen Milchschlauches 5 so gibt dies ein gutes Maß für die tatsächliche Masse des Pfropfens. In ähnlicher Weise ist in den Fig. 8 und 9 die Länge Li in den Fig. 8 und 9 jeweils entlang Linien im Abstand d/4 von der Innenwand des langen Milchschlauchs bestimmt worden. Wie aus den einfachen Darstellungen zu entnehmen ist, unterscheiden sich die Werte Li mit zunehmender Aushöhlung des Milchpfropfens erheblich von der von außerhalb des Rohres ersichtlichen und zu messenden Gesamtlänge La eines Pfropfens.

Die Messung der Dicke dieser Pfropfen erfolgt nunmehr allgemein dadurch, daß eine Meßstrecke quer zur Transportrichtung des Milchkolbens im Inneren des Milchschlauches vorgesehen wird, wobei der Durchgang des Pfropfens etwa zwischen einer Meßstelle auf der Linie 11 oder 12 und der Innenwand oder zwischen zwei Meßstellen auf etwa den Linien 11 und 12 gemessen wird.

Im folgenden werden zunächst verschiedene Ausführuhgsformen für derartige Meßstrecken angegeben.

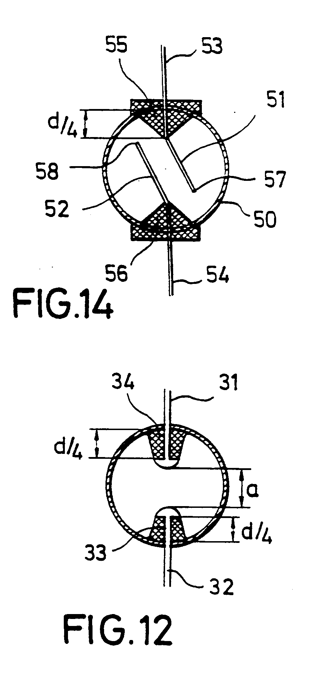

In den Fig. 10 und 11 ist das obere Ende eines langen Milchschlauches 14 dargestellt, das aus einem letzten Krümmerendstück 15 aus Metall besteht. Das Ende 16 des Krümmerendstücks 15 ist mit einem bekannten sogenannten Milchschloß 17 mit der meistens über Kopf geführten Melkleitung 18 verbindbar, über die insgesamt die ermolkene Milch abgeführt wird. Das metallische Krümmerstück 15 ist mit dem üblicherweise aus Gummi oder Kunststoff bestehenden Schlauch 19 des langen Milchschlauches verbunden. In dem Krümmerrohr 15 sind im vorliegenden Falle zwei Meßelektroden 21 und 22 vorgesehen, die über elektrische Isolationshalterungen 23, 24 elektrisch isolierend und dichtend durch die Rohrwand des Krümmerstücks 15 hindurchgeführt sind und in das Innere des Rohres vorstehen. Die Elektroden sind beide in Form von dünnen Stäben oder Drähten ausgebildet, die sich im wesentlichen senkrecht zu der Innenachse des Rohrstücks erstrecken. Die in das Rohrende vorstehenden Spitzen der Elektroden 21 und 22 sind in einem Abstand von d/4 in bezug auf die diesen Spitzen gegenüberliegende Innenwand 25 angeordnet. Ferner sind die Elektroden 22 und 21 durch die Isolationsteile 23 und 24 bis zu einem Abstand d/4 von der Innenwand 25 elektrisch isolierend abgedeckt. Beide Elektroden 22 und 21 sind über elektrische Leitungen 26, 27 mit entsprechenden Spannungsquellen verbunden. Als Gegenelektrode wirkt in dem vorliegenden Ausführungsbeispiel für beide Elektroden 21 und 22 das aus einem Metall bestehende Krümmerstück 15, das über eine Leitung 28 beispielsweise mit Masse verbunden ist.

In den Fig. 10 und 11 sind zwei Meßstrecken zwischen einerseits der Elektrode 21 und der Wand bzw. der Elektrode 22 und der Wand 15 vorgesehen, obgleich für die Bestimmung der Länge des Pfropfens lediglich eine Meßstrecke ausreichend ist. Geht man nämlich davon aus, was durch Messungen auch weitgehend bestätigt wurde, daß die Geschwindigkeit der Milchpfropfen bei niedrigen Milchflüssen, d.h. also in dem Bereich der Milchflußkurve, in dem sich der Milchfluß dem Schwellwert von 0,2 kg/min nähert, im wesentlichen jeweils gleich ist, so kann man diese Geschwindigkeit einmal messen und als einen konstanten Wert in die Meßschaltung eingeben. In diesem Falle ist also die Länge eines Milchkolbens durch einfache Messung der Zeit bestimmbar, die der Kolben benötigt, um durch die Meßstrecke hindurch zu laufen. Für diese Messung kann also entweder die Elektrode 21 oder die Elektrode 22 dienen.

Will man jedoch genauere Messungen durchführen oder insgesamt auch Messungen zu verschiedenen Zeiten während des Melkens durchführen, so wird für die Errechnung der Milchkolbenlänge auch die Bestimmung der Geschwindigkeit des Milchkolbens benötigt. Zu diesem Zweck sind in der Ausführungsform der Fig. 10 zwei in Längsrichtung des langen Milchschlauches im Abstand voneinander angeordnete Elektroden vorgesehen. Mit Hilfe einer Messung der Zeit, die der Milchkolben benötigt, um die Abstandsstrecke zwischen diesen Elektroden zu durchlaufen, kann sodann zusätzlich die Geschwindigkeit des Milchkolbens bestimmt und dadurch die genaue Länge jedes Milchkolbens ermittelt werden.

Bei der in Fig. 12 gezeigten Meßstrecke für eine elektrische Leitfähigkeitsmessung kann das Rohr 30, durch das der Milchpfropfen geleitet wird, aus Kunststoff aber auch aus einem elektrisch leitenden Material wie Metall bestehen. Die Elektroden 31 und 32 sind auf einander gegenüberliegenden Seiten des Rohres 30 durch dieses hinduchgeführt, wobei im Falle eines Rohres aus elektrisch isolierendem Material keine besonderen Isolationsmaßnahmen für die Durchführung vorgesehen werden müssen. Die beiden Elektroden sind in Form von Stäben ausgebildet, die an ihren Enden leicht zu etwa einem halbkugelförmigen Ende verbreitert sind. Die Elektroden sind so bemessen, daß das der Wand zugewandte hintere Ende des Kugelkopfes einen Abstand von im wesentlichen d/4 von der Innenwand aufweist. Über genau diese Länge sind die Elektroden durch entsprechend isolierendes Material 33, 34, das mit der Milch verträglich ist, elektrisch isolierend abgedeckt. Die einander zugewandten Spitzen der Elektroden 31 und 32 weisen einen Abstand a voneinander auf, der somit etwas kleiner als d/2 ist.

Nicht abgebildet ist eine Meßstrecke, auf der kapazitiv gemessen werden kann. Auf der Längsachse des Leitungsrohres 40 ist eine Zylinderhülse 41 angeordnet, die zu der Längsachse koaxial ausgerichtet ist. Die Zylinderhülse ist an ihren beiden in Längsrichtung im Abstand liegenden Enden durch Kugelkalotten abgeschlossen. Die Gesamtlänge dieser Hülse kann in Längsrichtung etwa zweimal dem Rohrdurchmesser entsprechen. Der Außendurchmesser der Hülse 41 in Querrichtung ist im wesentlichen gleich d/2, wenn d der Innendurchmesser des Rohres 40 ist. Die Hülse 41 ist über eine elektrische Leitung 42 mit der Außenseite des Rohrs 40 verbunden, wobei die elektrische Leitung isolierend durch das Rohr 40 hindurchgeführt ist und durch eine isolierende Halterung 43 im Inneren des Rohres 40 umgeben und nach außen elektrisch isoliert ist. Gleichzeitig wird die Hülse 41 durch diese isolierende Halterung 43 in ihrer Lage gehalten. Die Hülse 41 bildet eine Elektrode, die der Innenwand des Rohres, das aus einem elektrisch leitenden Material besteht, als zweite Elektrode gegenüberliegt. Das Rohr 40 ist mit einer elektrischen Leitung 44 verbunden.

In Fig. 14 ist eine weitere Meßstrecke gezeigt, auf der eine kapazitive Messung durchgeführt werden kann. In dem Leitungsrohr 50 sind im Abstand voneinander und im wesentlichen parallel zur Längsrichtung des Rohres 50 zwei Elektrodenplatten 51, 52 angeordnet, die über ihre elektrischen Zuleitungen 53, 54, die durch die Rohrwand 50 hindurchgeführt sind, gehalten werden. Die Zuleitungen 53, 54 sind im Inneren des Rohres 50 von einem elektrisch isolierenden Material 55, 56 umgeben, das die elektrischen Zuleitungen bis zu einem Abstand von d/4 von der Innenwand elektrisch isoliert. Die Platten 51, 52 sind gleichfalls so angeordnet und haben eine solche Länge, daß ihre freien Enden bzw. Kanten 57, 58 jeweils einen Abstand von im wesentlichen d/4 einhalten.

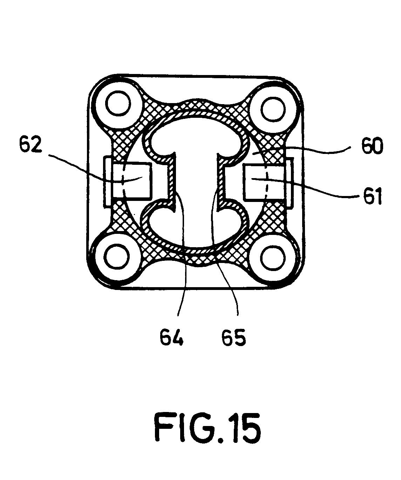

In Fig. 15 ist eine Meßstrecke gezeigt, auf der optisch gemessen werden kann. In das Leitungsrohr 60 stehen von einander gegenüberliegenden Seiten aus einerseits eine Lichtquelle, etwa in Form einer lichemittierenden Diode 61, und ein Photowiderstand 62 vor. Die einander zugwandten Enden der Lichtquelle bzw. des Photowiderstandes können etwa durch lichtdurchlässige Wände 63, 64 abgedeckt sein, die Teil des Innenrohres sein können. Diese Wände 63, 64 sind jeweils in einem Abstand von im wesentlichen d/4 von der eigentlichen Innenwand des Rohrs 60 angeordnet, und die Platten haben einen gegenseitigen Abstand von im wesentlichen d/2.

In den Fig. 16 und 17 ist eine Ausführungsform dargestellt, bei der eine Elektrode 71 in Form eines verhältnismäßig dünnen Metallblattes in dem Leitungsrohr 70 vorgesehen ist. Gleichzeitig ist schematisch die Halterung für diese Elektrode 71 gezeigt, die sich in Längsrichtung der Längsachse des Rohrs 70 erstreckt und mit ihrer vorderen Kante 72 etwa bis in die Mitte oder etwas weiter in das Rohr 70 hinein vorsteht. Die Elektrode 71 ist auf ihren Seiten in einer isolierenden Halterung 73 gehalten, wobei Teile dieser aus einem elektrisch isolierenden Material bestehenden Halterung die Elektrode bis zu einem Abstand von im wesentlichen d/4 von der inneren Umfangswand des Leitungsrohrs 70 bedecken und elektrisch isolieren. In dem Leitungsrohr 70 ist eine Ausnehmung 74 ausgebildet, in der der die Elektrode 71 halternde isolierende Teil 75 hinein vorsteht. Die Halterung ist aus zwei Blöcken 76, 77 gebildet, die das Leitungsrohr 70 umfassen und die mit Hilfe die Blöcke durchsetzenden Bolzen 78 zusammengehalten werden. Zur Abdichtung der in der Rohrleitung vorgesehen Öffnungen 74 ist ein O-Ring 79 vorgesehen, der den Block 76 gegen die Außenseite des Leitungsrohrs abdichtet. Bei dieser Ausführungsform ist das Leitungsrohr 70 aus einem elektrisch leitenden Material hergestellt, so daß die Innenwand des Leitungsrohrs als Gegenelektrode dienen kann. Aus diesem Grunde ist an das Leitungsrohr auf der Außenseite eine Masseklemme 80 angelegt. Die Masseklemme 80 sowie die Elektrode 71 sind über elektrische Leitungen 81, 82 mit entsprechenden, in der Zeichnung nicht dargestellten, Meßgeräten verbunden. Die gezeigte Meßstrecke zwischen der Kante 72 der Elektrode 71 und der dieser gegenüberliegenden Innenwand der Rohrleitung 70 wird bevorzugt unter Ausnutzung der elektrischen Leitfähigkeit der Milch genutzt, wobei bereits hier darauf hingewiesen wird, daß nicht die Stärke der Leitfähigkeit der Milch gemessen wird, sondern daß lediglich die Tatsache, daß die Milch als solche eine elektrisch leitende Verbindung zwischen der Elektrode 71 und der Rohrleitungswand 70 herstellt, ausgenutzt wird. D.h. bei einer entsprechenden Messung wird lediglich gemessen, ob eine Verbindung besteht oder nicht besteht.

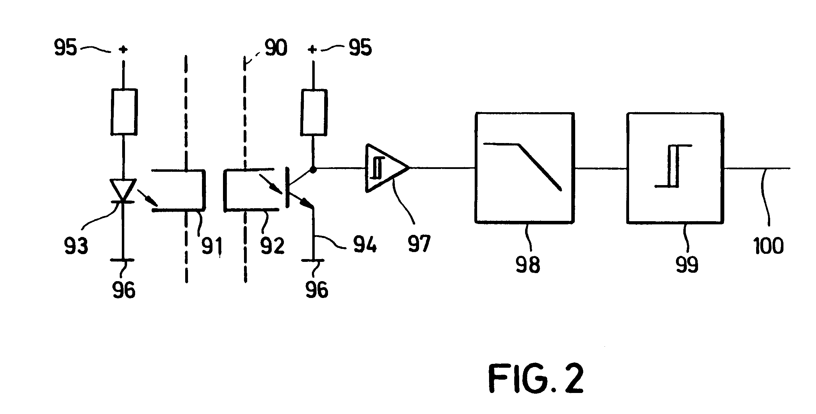

In Fig. 2 ist eine Ausführungsform eines Schaltkreises dargestellt, mit dem unter Verwendung einer Meßstrecke der vorstehend beschriebenen Art ein Indikator gebildet wird, der beim Unterschreiten eines Milchflußschwellwertes von etwa 0,2 kg/min am Ende eines Melkzyklus ein Steuersignal erzeugt. In der Fig. 2 ist der Abschnitt eines Steigrohres 90 schematisch dargestellt. In dieses Steigrohr können etwa entsprechend der in der Fig. 15 gezeigten Ausführungsform Abschnitte 91 und 92 vorstehen, über die die Strahlen von einem LED über die Meßstrecke auf einen Phototransistor 94 fallen. Die Anode des LED liegt über einen Widerstand R an einer Spannungsquelle 95 und auf der Kathodenseite an Masse 96. Der Phototransistor 94 liegt mit seinem Kollektor über ebenfalls einen Widerstand an der Spannungsquelle 95 und mit seinem Emitter an Masse 96. Der Ausgang des Kollektors wird auf einen Schmittrigger 97 gegeben, dessen Ausgang einem Tiefpaß 98 zugeführt wird. Am Ausgang des Tiefpaß liegt ein weiterer Schmittrigger 99 an dessen Ausgang 100 ein Steuersignal erscheint, wenn ein voreingestellter Mindestfluß unterschritten wird.

Die Schaltung arbeitet wie folgt:
Von der LED wird kontinuierlich ein Lichtstrahl erzeugt, der über die Meßstrecke auf den Phototransistor 94 fällt. Dadurch fließt in dem Phototransistor ein entsprechender Strom. Sobald ein Milchpfropfen mit seiner vorauslaufenden Kante in die Meßstrecke eintritt, wird Licht absorbiert, so daß der in dem Transistor 94 fließende Strom verringert wird. Unterschreitet der Strom einen vorbestimmten Schwellpunkt, wird an dem Schmittrigger 97 eine erste Flanke eines Rechtecksimpulses erzeugt. Läuft das hintere Ende des Milchpfropfens durch die Meßstrecke, so steigt der Strom in dem Phototransistor wieder an wodurch beim Durchschreiten eines zweiten Schwellwertes an dem Schmittrigger eine entsprechende Abfallflanke des von dem Schmittrigger abgegebenen Rechtecksimpulses gebildet wird. Die Länge des Rechtecksimpulses entspricht damit praktisch der Zeit, die zwischen dem Eintritt des vorauslaufenden Ende des Milchpfropfens bis zum Eintritt des nachlaufenden Endes des Milchpfropfens in die Meßstrecke vergeht. Nimmt man eine konstante Transportgeschwindigkeit dieser Pfropfen zumindest in der Nähe des unteren Schwellwertes für den Milchfluß an, so gibt die Breite der von dem Schmittrigger 97 abgegebenen Rechtecksimpulse unmittelbar ein Maß für die Länge der gemessenen Milchpfropfen.

Die Milchpfropfen erscheinen gerade am Ende eines Melkzyklus in immer größer werdenen zeitlichen Abständen, was bedeutet, daß die von dem Schmittrigger 97 abgegebenen Rechtecksimpulse in immer größeren zeitlichen Abständen auftreten. Der Tiefpaß 98 erzeugt nun unter Berücksichtigung der jeweiligen Länge der Rechtecksimpulse sowie deren gegenseitigem zeitlichen Abstand einen gemittelten gleitenden Meßwert. Dieser Meßwert am Ausgang des Tiefpasses gibt einen dem tatsächlichen Milchfluß entsprechenden Wert, der jedoch nicht geeicht ist, solange die tatsächliche Geschwindigkeit der Milchkolben nicht mit berücksichtigt ist. Da jedoch festgestellt wurde, daß der Milchfluß am Ende eines Melkzyklus in der Nähe des unteren Schwellwertes nahezu immer gleich ist, so kann der nachfolgende Schmittrigger 99 auf einen ersten vorbestimmten Schwellwert eingestellt werden, der dem Ausgangssignal des Tiefpasses 98 entspricht, wenn bei der vorbestimmten Geschwindigkeit ein Milchfluß von 0,2 kg/min vorliegt. Sinkt deshalb bei abnehmendem Milchfluß am Ende des Melkzyklus der von dem Tiefpaß 98 abgegebene Meßwert unter den an dem Schmittrigger 99 eingestellten Eingangsschwellwert, so wird der Schmittrigger geschaltet und erzeugt an seinem Ausgang 100 ein Signal, das für irgendwelche Anzeigen oder irgendwelche weiteren Steuerungen etwa zum Abschalten der Pulsation oder zum Abnehmen der Zitzenbecher verwandt werden kann. Da die repräsentative Länge der Milchpfropfen sehr genau gemessen werden kann, ist es möglich, zumindest im Bereich der niedrigen Milchflüsse im Melkzyklus ein verhältnismäßig genaues Signal entsprechend dem jeweiligen Milchlfuß zu erhalten und ein entsprechendes Ausgangssignal zu erzeugen, wenn ein vorbestimmter Milchfluß unterschritten wird. Der Schaltungsausgang stellt mithin eine einfache Ja-Nein-Messung dar.

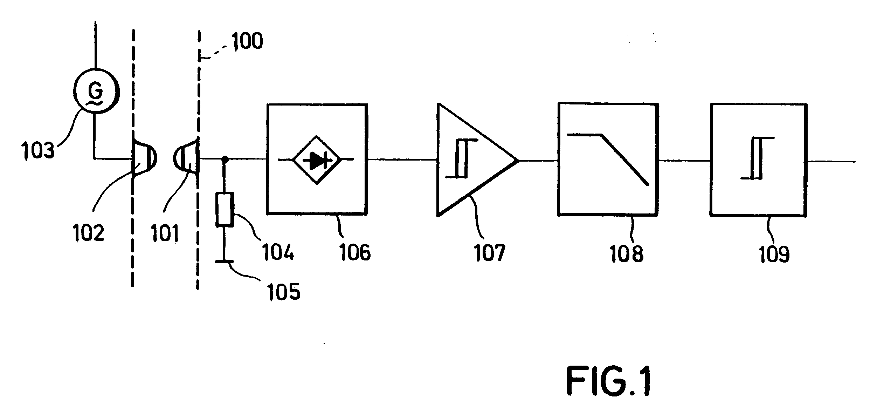

Fig. 1 zeigt eine ähnliche Ausführungsform wie in der Fig. 2. In dem Leitungsrohrabschnitt 100 sind wiederum schematisch Elektroden 101 und 102 vorgesehen. An die Elektrode 102 wird über den Wechselspannungsgenerator 103 ein Wechselspannungssignal gegeben. Am Ausgang der Elektrode 101 liegt ein Widerstand 104 gegen Masse 105. Mit dem Verbindungspunkt zwischen dem Ausgang der Elektrode 101 und dem Widerstand 104 ist ein Gleichrichter 106 verbunden. Der Ausgang des Gleichrichters wird auf einen Schmitttrigger 107 gegeben, dessen Ausgang einem Tiefpaß 108 zugeführt wird. Der Ausgang des Tiefpasses 108 wird auf den Eingang eines weiteren Schmittrigger 109 gegeben, an dessen Ausgang wiederum ein Ausgangssignal erscheint, wenn das von dem Tiefpaß 108 abgegebene Ausgangssignal den an dem Schmittrigger 109 eingestellten Eingangsschwellwert überoder unterschreitet. Die Schaltung arbeitet in derselben Weise wie die in Fig. 2 gezeigte Schaltung mit der Ausnahme, daß über die Meßstrecke zwischen den Elektroden 101, 102 ein Wechselstrom fließt, sobald zwischen den Elektroden durch den Milchpfropfen eine leitende Verbindung hergestellt wird.

Der an der Elektrode 101 auftretende Wechselstrom wird sodann durch den Gleichrichter 106 in ein Gleichspannungssignal umgewandelt, das sodann in ähnlicher Weise wie die in der Ausführungsform der Fig. 2 an den Tiefpaß 108 weitergeleitet wird.

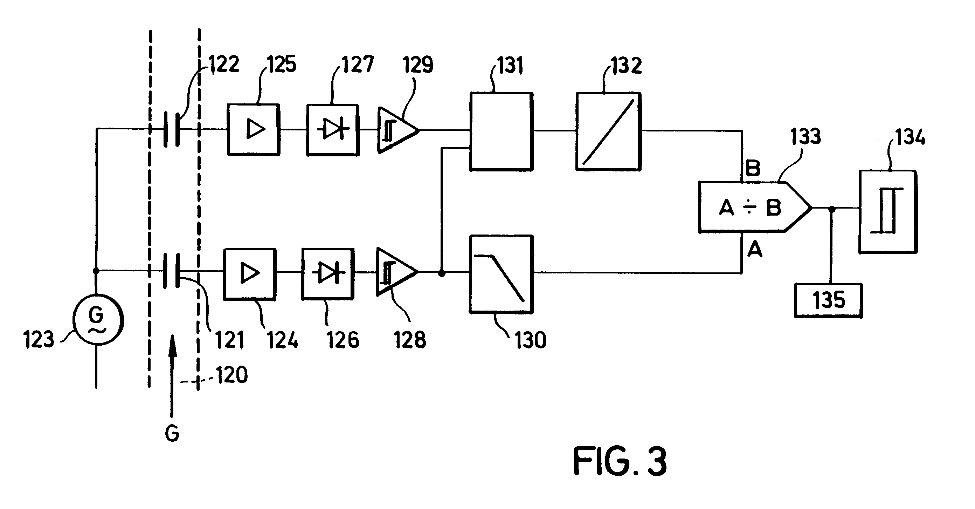

In der Fig. 3 ist eine Schaltungsanordnung dargestellt, bei der gleichzeitig, wie in der in den Fig 10 und 11 dargestellten Ausführungsform die Geschwindikgeit des Milchpfropfens noch mitbestimmt werden kann, wodurch ein dem jeweiligen Milchfluß direkt entsprechendes Meßsignal abgegeben werden kann.

In dem Steigleitungsrohrabschnitt 120 sind im Inneren des Rohres im axialen Abstand voneinander zwei Meßstrecken 121 und 122 vorgesehen, auf denen kapazitive Messungen ausgeführt werden können. Die Meßstrecken können etwa jeweils durch zwei sich einander gegenüberliegende Kondensatorplatten gebildet werden. Die auf der linken Seite in Fig. 3 liegenden Kondensatorplatten sind mit einem Wechselspannungsgenerator 123 verbunden. Die auf der rechten Seite der Zeichnung liegenden Kondensatorplatten sind jeweils mit einem Verstärker 124 bzw. 125 verbunden. An die Ausgänge der Verstärker schließen sich jeweils Gleichrichter 126, 127, die ihrerseits jeweils wiederum mit Schmittriggern 128, 129 verbunden sind. Der Ausgang des Schmittriggers 128 wird zum einen auf einen Tiefpaß 130 und zum anderen auf einen ersten Eingang einer Impulslängenmeßschaltung 131 gegeben. Das Ausgangssignal des Schmittriggers 129 wird auf einen zweiten Eingang dieser Impulslängenmeßschaltung 131 gegeben. Der Ausgang der Impulslängenmeßschaltung 131 wird auf einen Zeit-Spannungswandler 132 gegeben. Das Ausgangssignal des Tiefpasses 130 wird als Signal A auf eine Divisonsschaltung 133 gegeben, an die andererseits das Ausgangssignal B des Zeit-Spannungswandlers 132 gegeben wird. Die Divisonsschaltung 133 führt eine Division der Meßwerte A : B aus. Das erhaltene Ausgangssignal stellt bereits den Meßwert entsprechend dem jeweiligen Milchfluß dar und kann dazu verwandt werden, unter Berücksichtigung des Querschnittes des Leitungsrohrabschnitts 120 den Milchfluß in absoluten Werten anzugeben. Soll jedoch die Meßvorrichtung wie bei den vorhergehenden Ausführungsformen entsprechend den Fig. 1 und 2 als Indikator dienen, so kann am Ausgang der Divisonsschaltung 133 ein weiterer Schmittrigger 134 vorgesehen werden, der eine einfache Ja-Nein-Anzeige beim Über- oder Unterschreiten eines durch den Schmittrigger 134 eingestellten Schwellwertes ergibt.

Die Arbeitsweise ist wie folgt. Wird der Milchpfropfen entsprechend dem Pfeil G von unten nach oben durch den Leitungsrohrabschnitt 120 transportiert, so durchläuft er zunächst die Meßstrecke 121. Beim Eintreten des Milchpfropfens in die Meßstrecke erzeugt der Schmittrigger 128 die ansteigende Flanke eines Rechtecksimpulses und diese ansteigende Flanke wird sowohl auf den Tiefpaß 130 wie auf die Impulslängenmeßvorrichtung 131 gegeben, wo sie ein Startsignal erzeugt. Ist der Milchpfropfen in seiner Länge kleiner als der Abstand zwischen den beiden Meßstrecken 121, 122 so wird durch den Schmittrigger 128 am Ende des Milchpfropfens eine abfallende Flanke des Rechtecksimpulses erzeugt, der auf den Tiefpaß 130 gegeben wird. Gleichzeitig wird die abfallende Flanke auf den Impulslängenmeßkreis 131 gegeben, wodurch dessen Zustand jedoch nicht verändert wird. Erst wenn das vorauslaufende Ende des Michpfropfens in die Meßstrecke 122 eintritt, wird in dem Schmittrigger 129 eine ansteigende Flanke eines Rechtecksimpulses erzeugt, die auf den zweiten Eingang des Impulslängenmeßschaltkreises 131 gegeben wird und damit die Zeitmessung beendet. Am Ausgang des Impulslängenmeßschaltkreises erscheint deshalb ein Impuls, dessen ansteigende Flanke durch den Anstieg des Impulses von dem Schmittrigger 128 bestimmt wird und dessen abfallende Flanke von der Anstiegsflanke des von dem Schmittrigger 129 erzeugten Impulses bestimmt wird. Die Länge des Impulses am Ausgang des Impulslängenmeßkreises 131 entspricht der Zeit, die zwischen dem ersten Eintritt des Milchpropfens in die Meßstrecke 21 und dem ersten Eintritt in die Meßstrecke 122, d.h. während des Durchlaufens einer genau vorbestimmten Streckenlänge, vergangen ist. Da also die Zeit auf eine vorbestimmte Strecke bezogen ist, gibt das von dem Zeitspannungswandler 132 angegebene Signal unmittelbar den Kehrwert der Transportgeschwindigkeit des Milchpfropfens an. In der Divisonsschaltung 133 werden die von dem Tiefpaß 130 erhaltenen Signale A durch die von dem Zeitspannungswandler 132 erhaltenen Signale B dividiert. Am Ausgang erscheint ein Wert, der, wenn er noch mit dem Querschnitt des Steigleitungsabschnittes 120 multipliziert wird, unmittelbar den Fluß in der Einheit Volumen/Zeit angibt. Damit erhält man ein äußerst einfaches Flußmeßgerät, bei dem eine entsprechende Anzeige auf dem Anzeigegerät 135 angegebenen werden kann. Neben der Anzeige kann das Meßgerät aber auch als Indikator dienen, indem mit dem Ausgang der Divisionsschaltung 133 auch ein weiterer Trigger 134 verbunden wird, der bei Über- oder Unterschreiten eines vorbestimmten Milchflußwertes ein Anzeige- oder Steuersignal als reine Ja-Nein-Entscheidung liefert.

In Zusammenhang mit den Schaltung der Fig. 1 und 2 wurde erläutert, daß am Ausgang der Tiefpaßfilter 98 bzw. 108 jeweils ein Signal erhalten wird, das, wenn man diesen Signalwert mit dem Querschnitt der Steigleitung und einer Milchpfropfengeschwindigkeit multipliziert, wie sie im Bereich der unteren Michflüsse gemessen und als im wesentlichen konstant festgestellt wurde, so erhält man im Bereich niedriger Milchflüsse einen sehr guten Meßwert für den tatsächlich vorhandenen Milchfluß. Aus diesem Wert kann auf sehr einfache Weise ein über den gesamten Milchflußbereich korrigierter und genau gemessener Milchfluß erhalten werden, indem, wie in Fig. 3 beschrieben, eine zweite Meßstrecke mit einer entsprechenden Meßvorrichtung vorgesehen wird, die die tatsächliche Geschwindigkeit der jeweiligen Milchpfropfen bestimmt und indem man den gemessenen Milchfluß mit einem Korrekturwert p/q multipliziert, worin p die tatsächlich gemessene Transportgeschwindigkeit darstellt, während q die zuvor gemessene und sodann fest vorgegebene Transportgeschwindigkeit für niedrige Milchflüsse bedeutet.

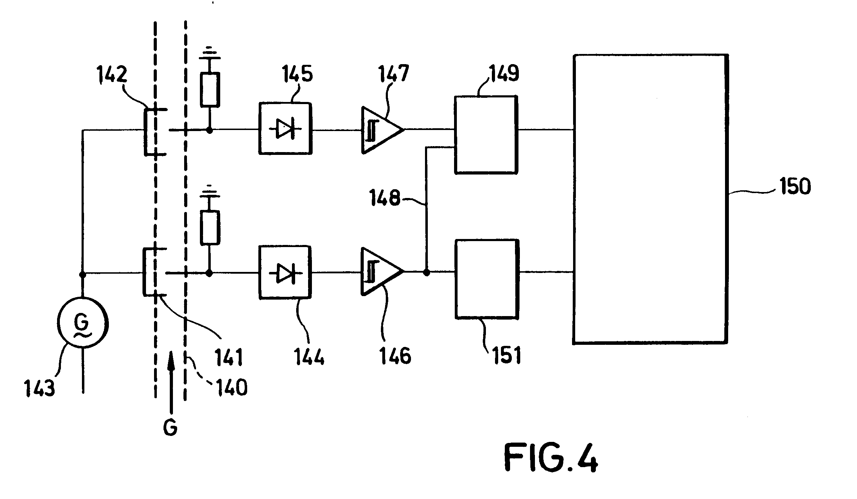

In der Fig. 4 ist eine ähnliche Schaltung wie in Fig. 3 dargestellt, die jedoch anstelle einer kapazitiven Messung eine Messung durch elektrische Leitung ermöglicht. In dem Steigleitungsabschnitt 140 sind im Inneren in einem genau vorbestimmten Abstand die Meßtrecken 141 und 142 angeordnet, die jeweils durch einander gegenüberstehende Elektroden gebildet werden. An die auf der linken Seite des Steigrohres liegenden Elektroden wird durch einen Wechselspannungsgenerator 143 eine Wechselspannung gegeben. Die Elektroden auf der rechten Seite des Steigleitungsrohrs 140 sind jeweils über einen Widerstand R mit Masse verbunden. Die von den Elektroden erhaltenen Signale werden jeweils über Gleichrichter 144, 145 auf Schmittrigger 146, 147 gegeben. Beim Durchlauf des vorauslaufenden Endes des Milchpfropfens durch die Meßstrecke 141 wird durch den Schmittrigger 146 eine Anstiegsflanke eines Impulses erzeugt, die als Startimpuls über die Leitung 148 auf einen Eingang des Impulslängenmeßschaltkreises 149 gegeben wird. Beim Eintritt des vorauslaufenden Ende des Milchpfropfens in die zweite Meßstrecke 142 wird durch den Schmittrigger 147 ebenfalls eine Anstiegsflanke eines Rechtechsimpules erzeugt, die auf den zweiten Eingang des Impulslängenmeßschaltkreises 149 gegeben wird. Dadurch wird in dem Impulslängenmeßschaltkreis 149 das Ende des Impulses geschaltet, der über die Startleitung 148 eingeleitet worden war. Die Zeitdauer dieses Impulses wird sodann auf den Mikroprozessor 150 gegeben. Anderseits werden auf den Mikroprozessor die in dem Impulslängenmeßschaltkreis 151 gemessenen Zeiten der von dem Schmittrigger 146 erzeugten Impulse gegeben. Der Mikroprozessor verknüpft diese Daten sodann zu einem Ausgangssignal, das unter Berücksichtigung des Querschnittes des Steigleitungsrohrabschnitts 140 einen Wert für den absoluten Milchfluß angibt. Andererseits kann von dem Mikroprozessor gleichfalls ein Steuersignal beim Unter- oder Überschreiten eines vorbestimmten Milchflußwertes abgegeben werden.

Mit den in den Fig. 3 und 4 gezeigten Meßanordnungen lassen sich Milchflußmesser bauen, die über den vollen Milchflußbereich d.h. in einem Milchflußbereich zwischen 150 g/min bis 9000 g/min messen können, wobei der Aufbau äußerst einfach ist und zusätzliche Vakuumverluste praktisch nicht auftreten.

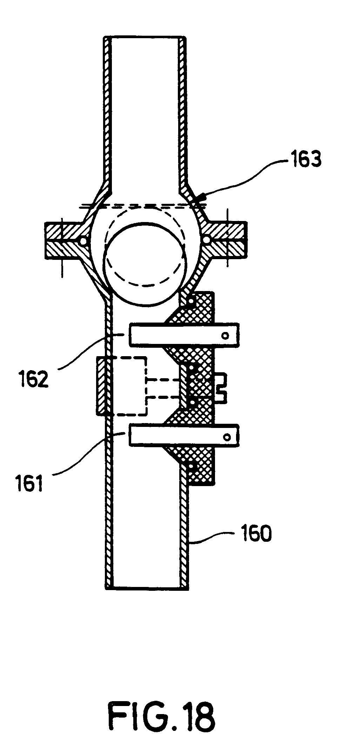

Wie bereits eingangs ausgeführt wurde, kann es insbesondere am Ende eines Melkzyklus, wenn die Masse der einzelnen Pfropfen immer kleiner wird, passieren, daß der Milchpfropfen beim Aufsteigen in dem Steigleitungsabschnitt und vor dem Erreichen der Melkleitung vollständig ausgehöhlt wird, d.h. daß die den Tropfen treibende Transportluft den Pfropfen durchbricht, so daß sich dieser in Form von Flüssigkeit, die zu den Wandbereichen wandert, auflöst. Tritt dieser Fall ein, so findet kein weiterer Transport der Flüssigkeit des Tropfens statt, vielmehr läuft die Flüssigkeit an den Wänden des Leitungsrohres zurück. Wenn es auch in diesem Fall durch spezielle Ausgestaltung der Meßstellen in den Meßstrecken ausdrücklich vermieden wird, daß die zurückfließende Milch auch als der Durchgang eines Pfropfens gemessen wird, so kann sich die Milch dennoch wieder in einem tieferen Punkt sammeln, und es erfolgt ein erneuter Transport eines neuen Milchpfropfens mit derselben Milch an der Meßstrecke vorbei. Dies würde einen gegenüber dem tatsächlichen Milchfluß erhöhten Milchfluß vortäuschen. Um eine solche Fehlmessung nach Möglichkeit auszuschließen, wird gemäß einer bevorzugten Ausführungsform, wie sie in Fig. 18 dargestellt ist, in dem Steigleitungsrohr 160 oberhalb der in diesem Fall vorgesehenen zwei Meßstrecken 161 und 162 ein Rückschlagventil 163 eingebaut. Das Rückschlagventil besteht im vorliegenden Fall aus einem einfachen Kugelrückschlagventil. Sollte sich demnach bei dieser Anordnung der Milchpfropfen nach dem Vorbeilaufen an den beiden Meßstrecken 161 und 162 und oberhalb des Rückschlagventils 163 auflösen, so würde die zurücklaufende Milch durch das Rückschlagventil 163 aufgefangen und somit nicht mehr an den Meßstrecken vorbeilaufen. Die über dem Rückschlagventil 163 gesammelte Milch würde zusammen mit dem nächsten ankommenden Milchpfropfen als ein vergrößerter Milchpfropfen in der Steigleitung weitertransportiert.

Eine entsprechende Verbesserung wird auch mit der in Fig. 10 gezeigten Ausführungsform erreicht. Bei dieser Anordnung liegen die durch die Elektroden 21 und 22 gebildeten Meßstrecken in unmittelbarer Nähe des obersten Punktes 165 des Krümmers 15. D.h. solche Pfropfen, die sich erst bei Erreichen des Punktes 165 aufzulösen beginnen, werden nicht durch die Meßanordnung zurückfließen sondern fließen unmittelbar in die Melkleitung 18 ab, so daß sie von einer nochmaligen Messung ausgeschlossen sind. Auf diese Weise kann die Meßgenauigkeit insbesondere bei niedrigen Milchflüssen erheblich gesteigert werden.

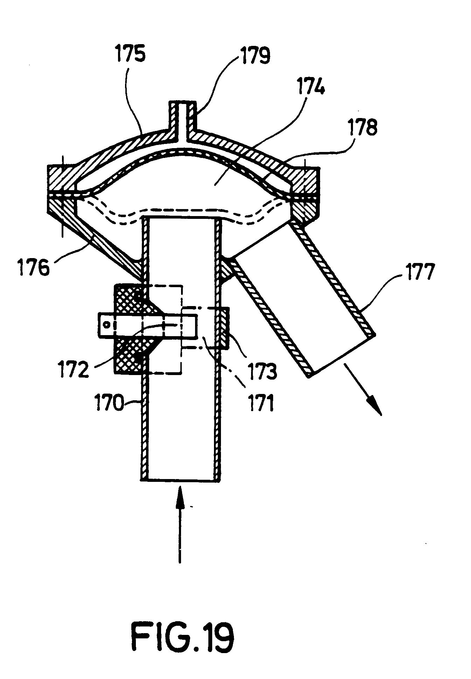

Wenn der Milchfluß zum ersten Mal unter den Schwellwert von 0,2 kg/min fällt, was etwa in der Milchflußkurve der Fig. 5 im Zeitpunkt A erreicht wird, so ist es natürlich erwünscht, daß nicht nur ein entsprechendes optisches oder akustisches Signal durch den Indikator erzeugt wird, um den Melker beispielsweise auf das Ende des Melkvorgangs aufmerksam zu machen. Oft ist der Melker wegen des gleichzeitigen Melkens von mehreren Kühen nicht in der Lage, einem solchen Signal entsprechend unmittelbar zu handeln. Dies würde trotz der exakten Anzeige des Endes des Melkvorganges bedeuten, daß die Kuh weiterhin während einer Zeit blindgemolken würde. Gemäß der Fig. 19 wird nunmehr eine Ausführungsform angegeben, durch die ein solches Blindmelken verhindert werden kann. Bei dieser Anordnung ist in der Steigleitung 170 eine Meßstrecke 171 mit einer ELektrode 172 und einer Gegenelektrode 173 vorgesehen. Unmittelbar nach dieser Meßstrecke endet das obere Ende der Steigleitung in einen Hohlraum 174, der einerseits durch eine das obere Ende der Steigleitung umgebende Schale 176 und andererseits durch eine den Hohlraum nach oben abgrenzenden Dom 175 abgeschlossen wird. In der unteren Schale 176 ist eine Abflußleitung 177 ab, über die die Milch des aus dem Steigrohr 170 austretende Milchpfropfen abgeführt werden kann, der an der Innenseite des Domes 175 ungelenkt worden ist. Zwischen den Rändern der Schale 176 und dem Dom 175 ist eine Membran 178 eingespannt, die während des Melkens aufgrund des an der Anschlußleitung 179, die durch den Dom hindurchgeführt ist, anliegenden Vakuums in der in der Fig. in ausgezogenen Linien dargestellten, ausgelenkten oberen Lage gehalten wird. D.h. in diesem Fall kann die Milch aus dem Steigrohr 170 über den Hohlraum 174 ungehindert über die Abflußleitung 177 abfließen.

Wird am Ende des Melkvorganges ein entsprechendes Steuersignal durch den Indikator abgegeben, so kann hierdurch das an der Zuleitung 179 anliegende Vakuum abgeschaltet werden, indem die Zuleitung etwa mit Atmosphärenluft verbunden wird. Durch diesen Steuervorgang wird die Membran, da an der Abflußleitung 177 weiterhin das Melkvakuum anliegt, in den in gestrichelten Linien dargestellten Zustand ausgelenkt, indem sie die obere Öffnung der Steigleitung 170 abschließt. Dadurch werden die Zitzen von dem Melkvakuum getrennt und eine automatische Melkzeugabnahmevorrichtung in Gang gesetzt.

Neben den bereits erwähnten Vorteilen weist das erfindungsgemäße Meßsystem insbesondere den Vorteil auf, daß die Milchzufuhr in die Meßstrecke von unten her erfolgt. Dies ermöglicht im Gegensatz zu den bekannten Rohrindikatoren auch in High-Line-Anlagen eine Milchschlauchführung auf kürzestem Weg und ohne Umlenkung. Dies wirkt sich sehr positiv auf die Strömungsverluste d.h. insbesondere Vakuumverluste wie auch auf die besondere Handhabung des System aus. Weiterhin werden der Schaltpunkt und das Flußsignal bei dem erfindungsgemäßen Meßsystem durch unterschiedliche Melksysteme, wie etwa kontinuierlicher oder periodischer Lufteinlaß, Gleichtakt- oder Wechseltaktpulsierung, praktisch nicht beeinflußt. Leitwertunterschiede der Milch beeinflußen das Signal nicht, weil sich die Pfropfenmassenbestimmung praktisch auf eine reine Ja-Nein-Entscheidung stützt. Weiterhin ist das Signal relativ unkritisch hinsichtlich in der Praxis auftretender Neigungsfehler des Meßsystems.

Obwohl vorstehend jeweils von einem Steigleitungsabschnitt gesprochen wird, so kann das System nicht nur in Melksystemen mit hoch verlegter Melkleitung verwandt werden. Vielmehr läßt sich das System durchaus auch in nieder verlegten Melksystemen anwenden, wobei lediglich dafür gesorgt werden muß, daß in die Abführleitung an einer beliebigen Stelle ein kurzes Steigleitungsstück eingefügt wird, über das die Milch in Form von Milchpfropfen transportiert wird.

**Patentansprüche**

1. Verfahren zum Messen des Milchflusses, bei dem während des intermittierenden, in Form von Milchpfropfen (1) erfolgenden Abtransports der ermolkenen Milch über einen unter Melkvakuum stehenden Steigleitungsabschnitt (205) die zeitliche Länge jedes Milchpfropfens zur Ermittlung eines seiner Masse entsprechenden Wertes bestimmt wird und durch zeitliche Mittelung über aufeinanderfolgende Milchpfropfen ein mittlerer Milchflußwert gebildet wird, dadurch gekennzeichnet,

   daß die zeitliche Länge der Pfropfen im Inneren des Steigleitungsabschnitts im Abstand von im wesentlichen d/4 von der Innenwand abgetastet wird, wobei ein Schwellwertvergleich (107, 97, 128) durchgeführt wird dergestalt, daß ein Ja oder Nein - Signal erzeugt wird je nachdem, ob die an der Innenwand anliegende Schichtdicke des Pfropfens quer zur Bewegungsrichtung an der Meßstelle größer oder kleiner als im wesentlichen d/4 ist,

   daß ausschließlich aus diesem Ja/Nein-Signal unter Berücksichtigung einer vorbestimmten Pfropfengeschwindigkeit und des Steigleitungsquerschnitts durch zeitliche Mittelung (108, 98, 130) über aufeinanderfolgende Pfropfen ein mittlerer Milchfluß gebildet wird, wobei d der Innendurchmesser der Steigleitung bedeutet.

2. Verfahren nach Anspruch 1, **dadurch gekennzeichnet**, daß der gemessene Milchflußwert jeweils mit einem, einen Schwellwert bildenden, voreingestellten zweiten Milchflußwert verglichen wird und bei Unter- oder Überschreiten dieses voreingestellten Milchflußwertes ein Steuersignal erzeugt wird.

3. Verfahren zum Messen des Milchflusses, bei dem während des intermittierenden, in Form von Milchpfropfen erfolgenden Abtransports der ermolkenen Milch über einen unter Melkvakuum stehenden Steigleitungsabschnitt die zeitliche Lange jedes Milchpfropfens zur Ermittlung eines seiner Masse entsprechenden Wertes bestimmt wird und durch zeitliche Mittelung über aufeinanderfolgende Milchpfropfen ein mittlerer Milchflußwert gebildet wird, dadurch gekennzeichnet,

   daß die Transportgeschwindigkeit der Milchpfropfen gemessen wird,

   daß die zeitliche Länge der Pfropfen im Inneren des Steigleitungsabschnitts im Abstand von im wesentlichen d/4 von der Innenwand abgetastet wird, wobei ein Schwellwertvergleich (107, 97, 128) durchgeführt wird dergestalt, daß ein Ja oder Nein - Signal erzeugt wird je nachdem, ob die an der Innenwand anliegende Schichtdicke des Pfropfens quer zur Bewegungsrichtung an der Meßstelle größer oder kleiner als im wesentlichen d/4 ist,

   daß ausschließlich aus diesem Ja/Nein-Signal unter Berücksichtigung der gemessenen Pfropfengeschwindigkeit und des Steigleitungsquerschnitts durch zeitliche Mittelung (108, 98, 130) über aufeinanderfolgende Pfropfen ein mittlerer Milchfluß gebildet wird, wobei d der Innendurchmesser der Steigleitung bedeutet.

4. Verfahren nach Anspruch 3, **dadurch gekennzeichnet**, daß bei Unterschreiten eines vorbestimmten Milchflusses ein Steuersignal erzeugt wird.

5. Vorrichtung zur Messung des Milchflusses

   mit einer unter Melkvakuum stehenden Steigleitung (205), bei der die ermolkene Milch unter Zugabe von Transportluft intermittierend in Form von Milchpfropfen über einen Steigleitungsabschnitt abtransportiert wird,

   mit Einrichtungen (107) zur Erzeugung eines Ja/Nein-Signals in Abhängigkeit von der Länge (Li) des durch eine Meßstrecke in dem Steigleitungsabschnitt laufenden Milchpfropfens zur Ermittlung eines seiner Masse entsprechenden Wertes und

   mit Einrichtungen (108) zur zeitlichen Mittelung über aufeinanderfolgende Milchpfropfen zur Bildung eines mittleren Milchflußwertes aus dem Ja/Nein Signal unter Berücksichtigung der Pfropfengeschwindigkeit und des Steigleitungsquerschnitts,

   wobei vorgesehen ist,

   daß die Meßstrecke in dem Steigleitungsabschnitt im Inneren des Steigleitungsrohres (205) als eine quer zur Transportrichtung des Milchpfropfens verlaufende Meßstrecke ausgebildet ist,

   daß die Meßstrecke zwischen einer ersten, von der Innenwand im Abstand von im wesentlichen d/4 angeordneten, bis zu diesem Abstand elektrisch isolierten Elektrode (101, 22, 31, 51, 71) und entweder der elektrisch leitenden Innenwand (15, 70) als Gegenelektrode oder einer der ersten Elektrode gegenüberliegenden, sich in das Steigleitungsrohr hineinerstreckenden zweiten Elektrode (102, 32, 52) als Gegenelektrode gebildet wird,

wobei die Meßstrecke so ausgeführt ist, daß ein leitender Kontakt zwischen den Elektroden dann gegeben ist, wenn die an der Innenwand anliegende Schichtdicke des Pfropfens quer zur Bewegungsrichtung an der Meßstelle größer als im wesentlichen d/4 ist, während kein elektrischer Kontakt besteht, wenn die Schichtdicke kleiner als im wesentlichen d/4 ist, wobei d der Innendurchmesser der Steigleitung bedeutet und das Ja/Nein-Signal dem Zustand leitender Kontakt oder kein leitender Kontakt entspricht.

6. Vorrichtung nach Anspruch 5, **dadurch gekennzeichnet**, daß die Meßstrecke zwischen der die Gegenelektrode bildenden Innenwand (25) des Steigleitungsrohr und einer die erste Elektrode bildenden Spitze (22) gebildet ist.

7. Vorrichtung nach Anspruch 6, **dadurch gekennzeichnet**, daß die Spitze durch eine sich in Längsrichtung des Steigleitungsrohrs erstreckende Kante (72; 172) einer in das Innere des Steigleitungsrohr vorstehenden Metallplatte (71; 171) ersetzt ist.

8. Vorrichtung nach Anspruch 6 oder 7, **dadurch gekennzeichnet,** daß jeder Teil der freiliegenden leitenden Elektrode (22) in einem Anstand zwischen 1/4 d bis 3/4 d von der Innenwand (25) liegt, wobei d den Innendurchmesser des Steigleitungsrohrs bedeutet.

9. Vorrichtung nach Anspruch 5, **dadurch gekennzeichnet**, daß die Elektroden (31, 32) in einem Abstand a ≤ d/2 angeordnet sind.

10. Vorrichtung zur Messung des Milchflusses

mit einer unter Melkvakuum stehenden Steigleitung (205), bei der die ermolkene Milch unter Zugabe von Transportluft intermittierend in Form von Milchpfropfen über einen Steigleitungsabschnitt abtransportiert wird,

mit Einrichtungen (97) zur Erzeugung eines Ja/Nein-Signals in Abhängigkeit von der Länge (Li) des durch eine Meßstrecke in dem Steigleitungsabschnitt laufenden Milchpfropfens zur Ermittlung eines seiner Masse entsprechenden Wertes und

mit Einrichtungen (98) zur zeitlichen Mittelung über aufeinanderfolgende Milchpfropfen zur Bildung eines mittleren Milchflußwertes aus dem Ja/Nein Signal unter Berücksichtigung der Pfropfengeschwindigkeit und des Steigleitungsquerschnitts,

wobei vorgesehen ist,

daß die Meßstrecke in dem steigleitungsabschnitt im Inneren des Steigleitungsrohres (205) als eine quer zur Transportrichtung des Milchpfropfens verlaufende Meßstrecke ausgebildet ist,

daß auf einander gegenüberliegenden Seiten der Steigleitung einerseits eine Lichtquelle (93, 91, 61, 65) und andererseits ein Lichtdetektor (92, 94, 62, 64) jeweils von der Innenwand in die Steigleitung hinein vorstehen, wobei die die Meßstrecke bildenden lichtdurchlässigen Wände (91, 92, 64, 65) der Lichtquelle und des Lichtdetektors jeweils einen Abstand von im wesentlichen d/4 von der Innenwand des Steigleitungsrohrs haben,

wobei das Ja oder Nein Signal erzeugt wird in Abhängigkeit davon, ob sich Milch in der Meßstrecke befindet oder nicht, d.h. ob die an der Innenwand anliegende Schichtdicke des Pfropfens quer zur Bewegungsrichtung an der Meßstelle größer oder kleiner als im wesentlichen d/4 ist, und wobei d der Innendurchmesser der Steigleitung bedeutet.

11. Vorrichtung zur Messung des Milchflusses

mit einer unter Melkvakuum stehenden Steigleitung (205), bei der die ermolkene Milch unter Zugabe von Transportluft intermittierend in Form von Milchpfropfen über einen Steigleitungsabschnitt abtransportiert wird,

mit Einrichtungen (128) zur Erzeugung eines Ja/Nein-Signals in Abhängigkeit von der Länge (Li) des durch eine Meßstrecke in dem Steigleitungsabschnitt laufenden Milchpfropfens zur Ermittlung eines seiner Masse entsprechenden Wertes und

mit Einrichtungen (130) zur zeitlichen Mittelung über aufeinanderfolgende Milchpfropfen zur Bildung eines mittleren Milchflußwertes aus dem Ja/Nein Signal unter Berücksichtigung der Pfropfengeschwindigkeit und des Steigleitungsquerschnitts,

wobei vorgesehen ist,

daß die Meßstrecke in dem Steigleitungsabschnitt im Inneren des Steigleitungsrohres (205) als eine quer zur Transportrichtung des Milchpfropfens verlaufende Meßstrecke ausgebildet ist,

daß die Meßstrecke gebildet ist durch einen Kondensator (121), dessen Elektroden (51, 52) gebildet werden durch zwei Elektrodenplatten, deren Zuleitungen im Inneren des Rohres von einem elektrisch isolierenden Material umgeben sind, das sie bis zu einem Abstand von im wesentlichen d/4 von der Innenwand des Steigleitungsrohrs elektrisch isoliert, wobei die Platten so angeordnet sind, daß ihre freien Enden bzw. Kanten (57, 58) jeweils einen Abstand von im wesentlichen d/4 von der Innenwand des Steigleitungsrohrs einhalten,

wobei das Ja oder Nein Signal erzeugt wird in Abhängigkeit davon, ob sich Milch in der Meßstrecke, d.h. zwischen den Elektroden, befindet oder nicht, d.h. ob die an der Innenwand anliegende Schichtdicke des Pfropfens quer zur Bewegungsrichtung an der Meßstelle größer oder kleiner als im wesentlichen d/4 ist, und wobei d den Innendurchmesser der Steigleitung bedeutet.

12. Vorrichtung zum Messen des Milchflusses nach einem der Ansprüche 5 bis 11, **dadurch gekennzeichnet**, daß mit der Einrichtung (98) zur zeitlichen Mittelung über aufeinanderfolgende Milchpfropfen ein Schwellwertkomparator (99) zum Vergleich des von der Einrichtung erhaltenen Ausgangssignals mit einem durch Kalibrieren erhaltenen, einen Schwellwert bildenden, voreingestellten zweiten Signalwert verbunden ist.

13. Vorrichtung nach einem der Ansprüche 5 bis 12, **dadurch gekennzeichnet**, daß in dem Steigleitungsabschnitt im Inneren des Steigleitungsrohrs eine zusätzlich zur ersten Meßstrecke (141, 121) und in Längsrichtung des Steigleitungsrohrs im Abstand von der ersten Meßstrecke angeordnete zweite Meßstrecke (142, 122) vorgesehen ist, und daß zur Ermittlung der Geschwindigkeit jedes Milchpfropfens eine Einrichtung (131, 149) zur Messung der Zeitdifferenz jedes die erste und zweite Meßstrecke durchlaufende Milchpfropfens vorgesehen ist.

14. Vorrichtung nach Anspruch 13, **dadurch gekennzeichnet**, daß die zweite Meßstrecke einen Aufbau nach einem der Ansprüche 5 bis 11 hat.

15. Vorrichtung nach Anspruch 13, **dadurch gekennzeichnet**, daß die zweite Meßstrecke einen Aufbau wie die erste Meßstrecke hat.

16. Vorrichtung nach einem der Ansprüche 5 bis 15, **dadurch gekennzeichnet**, daß die erste (21) und gegebenenfalls die zweite (22) Meßstrecke unmittelbar vor einem in das Milchschloß (16, 17) mündenden Krümmerteil eines Steigleitungsabschnitts (15) angeordnet sind.

17. Vorrichtung nach einem der Ansprüche 5 bis 16, **dadurch gekennzeichnet**, daß in der Milchtransportleitung (160) in Transportrichtung der Milchpfropfen unmittelbar hinter der ersten (161) oder gegebenenfalls zweiten Meßstrecke (162) eine Rücklaufsperre (163) vorgesehen ist.

18. Vorrichtung nach einem der Ansprüche 12 bis 17, **dadurch gekennzeichnet**, daß eine Vorrichtung zur Erzeugung eines Steuersignals bei Unterschreiten eines vorbestimmten Milchflußwertes durch den gemessenen Milchflußwert vorgesehen ist.

19. Vorrichtung nach einem der Ansprüche 12 bis 18, **dadurch gekennzeichnet**, daß in der Milchtransportleitung (170, 177) ein auf das Steuersignal hin schließbares Vakuumabsperrventil (174) vorgesehen ist.

20. Vorrichtung nach Anspruch 19, **dadurch gekennzeichnet**, daß das Absperrventil (174) aus einem Membranventil besteht.

**Claims**

1. Method for measuring milk flow, in which during the intermittent transfer of the freshly drawn milk in the form of milk plugs (1) via a section of a riser pipe (205) subject to milking vacuum the length in time of each milk plug is determined in order that a value corresponding to its mass can be calculated and an average milk flow value is obtained by averaging the times of successive milk plugs, characterized in that the length in time of the plugs is sensed inside the rising pipe section at a distance of essentially d/4 from the inner wall, and comparison with a threshold value (107, 97, 128) is performed in such a way that a go/no-go signal is generated according to whether the thickness of the layer of the plug in contact with the inner wall, at right angles to the direction of motion at the measuring point, is greater or smaller than essentially d/4, that, solely from this go/no-go signal, and taking account of a predetermined plug velocity and of the cross-sectional area of the riser pipe, an average milk flow is obtained by averaging (108, 98, 130) the times of successive plugs, where d stands for the internal diameter of the riser pipe.

2. Method according to Claim 1, characterized in that each measured milk flow value is compared with a preset second milk flow value constituting a threshold value, and a control signal is generated if the measured value falls below or exceeds this preset value.

3. Method for measuring milk flow, in which during the intermittent transfer of the freshly drawn milk in the form of milk plugs via a section of a riser pipe subject to milking vacuum the length in time of each milk plug is determined in order that a value corresponding to its mass can be calculated and an average milk flow value is obtained by averaging the times of successive milk plugs, characterized in that the transfer velocity of the milk plug is measured, and the length in time of the plugs is sensed inside the section of riser pipe at a distance of essentially d/4 from the inner wall, and comparison with a threshold value (107, 97, 128) is performed in such a way that a go/no-go signal is generated according to whether the thickness of the layer of the plug in contact with the inner wall, at right angles to the direction of motion at the measuring point, is greater or smaller than essentially d/4, that, solely from this go/no-go signal, and taking account of the measured plug velocity and of the cross-sectional area of the riser pipe, an average milk flow is obtained by averaging (108, 98, 130) the times of successive plugs, where d stands for the internal diameter of the riser pipe.

4. Method according to Claim 3, characterized in that a control signal is generated if the milk flow falls below a predetermined value.

5. Apparatus for measuring milk flow, with a riser pipe (205) subject to milking vacuum, in which the freshly drawn milk to which transport air has been added is transferred intermittently in the form of milk plugs via a section of the riser pipe with devices (107) for generating a go/no-go signal depending on the length (Li) of the milk plug passing through a measurement path in the section of the riser pipe in order that a value corresponding to its mass can be calculated, and with devices (108) for averaging the times of successive milk plugs so that an average milk flow value can be obtained from the go/no-go signal taking account of the plug velocity and of the cross-sectional area of the riser pipe, provision being made in order that the measurement path in the section of the riser pipe inside the riser pipe (205) is in the form of a measurement path extending at right angles to the transfer direction of the milk plug, that the measurement path is formed between a first electrode (101, 22, 31, 51, 71) located at a distance of essentially d/4 from the inner wall, and electrically insulated over that distance, and either the electrically conducting inner wall (15, 70) acting as counterelectrode or a second electrode (102, 32, 52) opposite the first electrode and extending into the riser pipe and acting as counterelectrode, the measurement path being set up so that conductive contact is made between the electrodes when the thickness of the layer of the plug in contact with the inner wall, at right angles to the direction of motion at the measuring point, is greater than essentially d/4 whereas there is no electrical contact when the thickness of the layer is smaller than essentially d/4, where d stands for the internal diameter of the riser pipe and the go/no-go signal corresponds to the condition : conductive contact or no conductive contact.

6. Apparatus according to Claim 5, characterized in that the measurement path is formed between the inner wall (25) of the riser pipe constituting the counterelectrode and a tip (22) constituting the first electrode.

7. Apparatus according to Claim 6, characterized in that an edge (72; 172), extending in the longitudinal direction of the riser pipe, of a metal plate (71; 171) protruding into the interior of the riser pipe is substituted for the tip.

8. Apparatus according to Claim 6 or 7, characterized in that every part of the exposed conducting electrode (22) lies at a distance of between 1/4 d and 3/4 d from the inner wall (25), where d stands for the internal diameter of the riser pipe.

9. Apparatus according to Claim 5, characterized in that the electrodes (31, 32) are separated by a distance a not exceeding d/2.

10. Apparatus for measuring milk flow, with a riser pipe (205) subject to milking vacuum, in which the freshly drawn milk to which transport air has been added is transferred intermittently in the form of milk plugs via a section of the riser pipe with devices (97) for generating a go/no-go signal depending on the length (Li) of the milk plug passing through a measurement path in the section of the riser pipe in order that a value corresponding to its mass can be calculated, and with devices (98) for averaging the times of successive milk plugs so that an average milk flow value can be obtained from the go/no-go signal taking account of the plug velocity and of the cross-sectional area of the riser pipe, provision being made in order that the measurement path in the section of the riser pipe inside the riser pipe (205) is in the form of a measurement path extending at right angles to the transfer direction of the milk plug, that a light source (93, 91, 61, 65) and a light detector (92, 94, 62, 64) protrude from the inner wall into the riser pipe on opposite sides of the riser pipe, the transparent walls (91, 92, 64, 65) of the light source and light detector which form the measurement path each being located at a distance of essentially d/4 from the inner wall of the riser pipe, the go or no-go signal being generated according to whether or not milk is present in the measurement path, that is to say, whether the thickness of the layer of the plug in contact with the inner wall, at right angles to the direction of motion at the measuring point, is greater or smaller than essentially d/4, where d stands for the internal diameter of the riser pipe.

11. Apparatus for measuring milk flow, with a riser pipe (205) subject to milking vacuum, in which the freshly drawn milk to which transport air has been added is transferred intermittently in the form of milk plugs via a section of the riser pipe with devices (128) for generating a go/no-go signal depending on the length (Li) of the milk plug passing through a measurement path in the section of the riser pipe in order that a value corresponding to its mass can be calculated, and with devices (130) for averaging the times of successive milk plugs so that an average milk flow value can be obtained from the go/no-go signal taking account of the plug velocity and of the cross-sectional area of the riser pipe, provision being made in order that the measurement path in the section of the riser pipe inside the riser pipe (205) is in the form of a measurement path extending at right angles to the transfer direction of the milk plug, the measurement path is formed by a capacitor (121) with electrodes (51, 52) formed by two plate electrodes whose leads inside the pipe are surrounded by an electrically insulating material which electrically insulates them over a distance of essentially d/4 from the inner wall of the riser pipe, the plates being arranged so that their free ends or edges (57, 58) each maintain a distance of essentially d/4 from the inner wall of the riser pipe, the go or no-go signal being generated according to whether or not milk is present in the measurement path, i.e. between the electrodes, that is to say, whether the thickness of the layer of the plug in contact with the inner wall, at right angles to the direction of motion at the measuring point, is greater or smaller than essentially d/4, where d stands for the internal diameter of the riser pipe.

12. Apparatus for measuring milk flow according to any one of Claims 5 to 11, characterized in that the device (98) for averaging the times of successive milk plugs is connected to a threshold value comparator (99) for comparing the output signal received from the device with a present second signal value obtained by calibration and constituting a threshold value.

13. Apparatus according to any one of Claims 5 to 12, characterized in that a second measurement path (142, 122) is provided in the section of the riser pipe inside the riser pipe in addition to the first measurement path (141, 121) and located at a distance from the first measurement path in the longitudinal direction of the riser pipe, and in that a device (131, 149) for measuring the time difference of each milk plug traversing the first and second measurement paths is provided in order that the velocity of each milk plug can be calculated.

14. Apparatus according to Claim 13, characterized in that the second measurement path has a construction according to any one of Claims 5 to 11.

15. Apparatus according to Claim 13, characterized in that the second measurement path has a similar construction to the first measurement path.

16. Apparatus according to any one of Claims 5 to 15, characterized in that the first measurement path (21), and, if present, the second measurement path (22), are located immediately upstream of an elbow piece of a section of riser pipe (15) which discharges into the milk lock (16, 17).

17. Apparatus according to any one of Claims to 5 to 16, characterized in that a return-flow lock (163) is provided in the milk transfer line (160) immediately downstream of the first measurement path (161) or, if present, the second measurement path (162), in the transfer direction of the milk plugs.

18. Apparatus according to any one of Claims 12 to 17, characterized in that a system is provided far generating a control signal when the measured milk flow value falls below a predetermined milk flow value.

**19.** Apparatus according to any one of Claims 12 to 18, characterized in that a vacuum shut-off valve (174) which is closed upon the control signal's being given is provided in the milk transfer line (170, 177).

**20.** Apparatus according to Claim 19, characterized in that the shut-off valve (174) consists of a diaphragm valve.

**Revendications**

**1.** Procédé pour mesurer le débit de lait, dans lequel; pendant l'évacuation du lait obtenu par la traite, qui s'effectue par intermittence, sous la forme de bouchons de lait (1), par un tronçon de conduite montante (205) mis sous vide pour traire ; la longueur en temps de chaque bouchon de lait est déterminée, pour calculer une valeur correspondant à sa masse, et une valeur moyenne du débit de lait est déterminée en faisant la moyenne dans le temps sur des bouchons de lait successifs, caractérisé en ce que la longueur en temps des bouchons à l'intérieur du tronçon de conduite montante est mesurée sensiblement à la distance de d/4 de la paroi interne, une comparaison avec la valeur seuil (107, 97, 128) étant effectuée de telle façon qu'un signal oui ou non soit généré, selon que l'épaisseur de couche du bouchon le long de la paroi interne, transversalement au sens de déplacement au point de mesure, est supérieure ou inférieure sensiblement à d/4, en ce que exclusivement à partir de ce signal oui/non, compte tenu d'une vitesse de bouchon prédéfinie et de la section du tronçon de conduite montante, on détermine un débit moyen en faisant la moyenne dans le temps sur des bouchons successifs , d étant le diamètre intérieur de la conduite montante.

**2.** Procédé selon la revendication 1, caractérisé en ce que le débit de lait mesuré est comparé chaque fois avec un deuxième débit de lait préajusté et constituant une valeur seuil, et un signal de contrôle est généré en cas de sous-dépassement ou de dépassement de cette valeur préréglée.

**3.** Procédé pour mesurer le débit de lait, dans lequel; pendant l'évacuation du lait obtenu par la traite, qui s'effectue par intermittence, sous la forme de bouchons de lait, par un tronçon de conduite montante mis sous vide pour traire; la longueur en temps de chaque bouchon de lait est déterminée pour calculer une valeur correspondant à sa masse et une valeur moyenne du débit de lait est obtenue en faisant la moyenne dans le temps sur des bouchons de lait successifs, caractérisé en ce que la vitesse de transport des bouchons de lait est mesurée, en ce que la longueur en temps des bouchons à l'intérieur du tronçon de conduite montante est lue sensiblement à la distance de d/4 de la paroi interne, une comparaison avec la valeur seuil (107,97,128) étant effectuée de telle façon qu'un signal oui ou non soit généré, selon que l'épaisseur de couche du bouchon le long de la paroi interne transversalement au sens de déplacement au point de mesure, est supérieure ou inférieure à sensiblement d/4, en ce que exclusivement à partir de ce signal oui/non, compte tenu de la vitesse mesurée du bouchon et de la section du tronçon de conduite montante, on détermine un débit moyen en faisant la moyenne dans le temps sur des bouchons successifs, d étant le diamètre intérieur de la conduite montante.

**4.** Procédé selon la revendication 3, caractérisé en ce qu'un signal de commande est généré en cas de sous-dépassement d'un débit de lait prédéterminé.

**5.** Dispositif pour mesurer le débit de lait, équipé :

- d'une conduite montante (205) mise sous vide pour traire, dans lequel le lait obtenu par la traite est évacué avec addition d'air de transport, par intermittence, sous la forme de bouchons de lait par un tronçon de conduite montante,
- d'appareils (107) pour générer un signal oui/non, fonction de la longueur (Li) du bouchon de lait traversant une section de mesure se trouvant dans le tronçon de conduite montante, pour calculer une valeur correspondant à sa masse et
- d'appareils (108) pour faire la moyenne dans le temps sur des bouchons de lait successifs pour obtenir une valeur moyenne du débit de lait à partir du signal oui/non compte tenu de la vitesse du bouchon, et de la section du tronçon de conduite montante,

  cet appareil étant conçu de telle sorte que la section de mesure dans le tronçon de conduite montante à l'intérieur du tube formant la conduite montante (205) est conçue comme une section de mesure s'étendant transversalement au sens de transport du bouchon de lait,
- que la section de mesure est formée entre d'une part une première électrode (101, 22, 31,51,71) disposée sensiblement à la distance de d/4 de la paroi interne et isolée électriquement jusqu'à cette distance, et, d'autre part, en tant que contre-électrode soit la paroi interne (15, 70) électroconductrice, soit une deuxième électrode (102, 32, 52) qui fait face à la première électrode et fait saillie à l'intérieur du tuyau formant la conduite montante, la section de mesure étant réalisée de telle manière qu'un contact ait lieu entre les électrodes dans les cas où l'épaisseur de couche du bouchon le long de la paroi interne, transversalement au sens de déplacement au point de mesure, est supérieure sensiblement à d/4, tandis qu'il n'y a pas de contact électrique lorsque l'épaisseur de couche est inférieure sensiblement à d/4, d étant le diamètre intérieur de la conduite montante et le signal oui/non correspondant à la présence ou à l'absence d'un contact conducteur.

6. Dispositif selon la revendication 5, caractérisé en ce que la section de mesure est formée entre la paroi interne (25), du tuyau formant la conduite montante, formant la contre-électrode et une pointe (22) formant la première électrode.

7. Dispositif selon la revendication 6, caractérisé en ce que la pointe est remplacée par une arête (72; 172) s'étendant dans le sens de la longueur du tuyau formant la conduite montante, d'une plaque métallique (71; 171) faisant saillie à l'intérieur du tuyau de conduite montante.

8. Dispositif selon la revendication 6 ou 7, caractérisé en ce que chaque partie de l'électrode (22) conductrice mise à nue se trouve à une distance comprise entre $\frac{1}{4}$ d et $\frac{3}{4}$ d de la paroi interne (25), d étant le diamètre intérieur du tuyau formant la conduite montante.

9. Dispositif selon la revendication 5, caractérisé en ce que les électrodes (31, 32) sont disposées à une distance a ≤ d/2.

10. Dispositif pour mesurer le débit de lait, équipé :
   - d'une conduite montante (205) mise sous vide pour traire, dans lequel le lait obtenu par la traite est évacué avec addition d'air de transport, par intermittence, sous la forme de bouchons de lait, par un tronçon de conduite montante,

   - d'appareils (97) pour générer un signal oui/non fonction de la longueur (Li) du bouchon de lait traversant une section de mesure, se trouvant dans le tronçon de conduite montante, pour calculer une valeur correspondant à sa masse
   - et d'appareils (98) pour faire la moyenne dans le temps sur des bouchons de lait successifs pour obtenir une valeur moyenne du débit de lait à partir du signal oui/non, compte tenu de la vitesse du bouchon et de la section du tronçon de conduite montante,
      cet appareil étant conçu de telle sorte que la section de mesure est formée dans le tronçon de conduite montante à l'intérieur du tube formant la conduite montante (205) comme une section de mesure s'étendant transversalement au sens de transport du bouchon de lait,
   - que sur les faces opposées de la conduite montante d'une part une source de lumière (93,91,61,65) et d'autre part un détecteur de lumière (92,94,62,64) font saillie respectivement de la paroi interne vers l'intérieur de la conduite montante; les parois (91,92,64,65) transparentes à la lumière, formant la section de mesure, de la source lumineuse et du détecteur de lumière, étant à une distance sensiblement de d/4 de la paroi interne du tuyau formant la conduite montante; le signal oui ou non étant généré en fonction de la présence ou non de lait dans la section de mesure, c'est dire en fonction du fait que l'épaisseur de couche du bouchon le long de la paroi interne, transversalement au sens de mouvement au point de mesure, est supérieure ou inférieure sensiblement à d/4; d étant le diamètre intérieur de la conduite montante.

11. Dispositif pour mesurer le débit de lait, équipé
   - d'une conduite montante (205) mise sous vide pour traire, dans lequel le lait obtenu par la traite est évacué avec addition d'air de transport, par intermittence, sous la forme de bouchons de lait, par un tronçon de conduite montante,
   - d'appareils (128) pour générer un signal oui/non, fonction de la longueur (Li) du bouchon de lait traversant une section de mesure, et se trouvant dans le tronçon de conduite montante, pour calculer une valeur correspondant à sa masse
   - et d'appareils (130) pour faire la moyenne dans le temps sur des bouchons de lait successifs pour obtenir une valeur moyenne du débit de lait à partir du signal oui/non compte tenu de la vitesse du bouchon et de la section du tronçon de conduite montante,

cet appareil étant conçu de telle sorte que la section de mesure est formée dans le tronçon de conduite montante à l'intérieur du tube formant la conduite montante (205) comme une section de mesure s'étendant transversalement au sens de transport du bouchon de lait,

- que la section de mesure est formée par un condensateur (121) dont les électrodes (51,52) sont constituées par deux plaques d'électrode dont les alimentations sont entourées à l'intérieur du tuyau par un matériau isolant électriquement qui les isole électriquement jusqu'à une distance sensiblement de d/4 de la paroi interne du tuyau formant la conduite montante, les plaques étant disposées de façon que leurs extrémités libres ou arêtes (57,58) respectent chacune un écartement sensiblement de d/4 par rapport à la paroi interne du tuyau de conduite montante, le signal oui ou non étant généré en fonction de la présence ou non de lait dans la section de mesure, c'est-à-dire entre les électrodes, c'est-à-dire en fonction du fait que l'épaisseur de couche du bouchon, le long de la paroi interne, transversalement au sens du mouvement au point de mesure, est supérieure ou inférieure sensiblement à d/4, d étant le diamètre intérieur de la conduite montante.

12. Dispositif pour mesurer le débit de lait selon l'une des revendications 5 à 11, caractérisé en ce que au dispositif (98) pour réaliser le calcul de la moyenne dans le temps sur des bouchons de lait successifs, est relié un comparateur avec la valeur seuil (99) pour comparer le signal de sortie reçu de l'appareil avec une deuxième valeur de signal préajustée, obtenue par calibrage et formant une valeur seuil.

13. Dispositif selon l'une des revendications 5 à 12, caractérisé en ce qu'il est prévu dans le tronçon de conduite montante à l'intérieur du tuyau formant la conduite montante, une deuxième section de mesure (142, 122) en plus de la première section de mesure (141, 121) disposée dans le sens longitudinal du tuyau formant la conduite montante, et à distance de la première section de mesure, et en ce que, pour calculer la vitesse de chaque bouchon de lait, il est prévu un appareil (131, 149) pour mesurer l'écart en temps pour chaque bouchon de lait traversant la première et la deuxième sections de mesure.

14. Dispositif selon la revendication 13, caractérisé en ce que la deuxième section de mesure a une structure selon l'une des revendications 5 à 11.

15. Dispositif selon la revendication 13, caractérisé en ce que la deuxième section de mesure a une structure identique à la première section de mesure.

16. Dispositif selon l'une des revendications 5 à 15, caractérisé en ce que la première section, et éventuellement la deuxième (22) section de mesure, sont disposées juste avant une partie coudée d'un tronçon de conduite montante (15) qui débouche dans un raccord aboutissant à la conduite principale recueillant le lait (16, 17).

17. Dispositif selon l'une des revendications 5 à 16, caractérisé en ce qu'il est prévu un dispositif anti-retour (163) dans la conduite de transport de lait (160) dans le sens du transport des bouchons de lait juste avant la première (161) section de mesure ou éventuellement la deuxième section de mesure (162).

18. Dispositif selon l'une des revendications 12 à 17, caractérisé en ce qu'un dispositif est prévu pour la génération d'un signal de commande en cas de sous-dépassement d'une valeur prédéterminée par la valeur mesurée du débit de lait.

19. Dispositif selon l'une des revendications 12 à 18, caractérisé en ce que, dans la conduite de transport du lait (170, 177), il est prévu dans la conduite de transport du lait (170, 177) une soupape d'arrêt (174) à dépression qui peut être fermée sous l'action du signal de commande.

20. Dispositif selon la revendication 19, caractérisé en ce que la soupape d'arrêt (174) se compose d'une soupape à diaphragme.

FIG.1

100

101

102

103

104

105

106

107

108

109

FIG.2

FIG. 3

EP 0 509 288 B1

FIG.4

FIG.5

EP 0 509 288 B1

FIG.6

FIG.9

FIG.8

FIG.7

FIG.11

FIG.10

FIG.14

FIG.12

FIG.15

FIG.16

FIG.17

**FIG.18**

FIG.19

FIG.20